# EUROPÄISCHE PATENTANMELDUNG

(11) **EP 4 674 570 A2**
(43) Veröffentlichungstag der Anmeldung: **07.01.2026**
(21) Anmeldenummer: 25208286.2
(22) Anmeldetag: 18.06.2021
(51) Int. Cl.: B25F 5/00

(54) **ABSAUGAUFSATZ**

(30) Priorität: 03.07.2020 DE 102020208392
(62) Teilanmeldung aus: 21180266.5
(71) Anmelder: Robert Bosch GmbH, 70442 Stuttgart (DE)
(72) Erfinder: Schurig, Andreas, 3250 Lyss (CH); Janjic, Nikola, 4512 Bellach (CH); Duesselberg, Achim, 73230 Kirchheim Unter Teck (DE); Qiu, Xiao, 88250 Weingarten (DE); Sonntag, Stefan, 88267 Vogt (DE); Schaber, Christian, 3012 Bern (CH); Wassmer, Melanie, 5000 Aarau (CH)

(57) **Zusammenfassung**

Die Erfindung betrifft eine Befestigungsvorrichtung für einen Saugschlauch, mit einem Grundkörper, mit einer ersten Befestigungsschnittstelle zur insbesondere werkzeuglos lösbaren Befestigung des Grundkörpers an einer Handwerkzeugmaschine und/oder einem Zusatzhandgriff und mit einer zweiten Befestigungsschnittstelle zur insbesondere werkzeuglos lösbaren Befestigung des Saugschlauches an dem Grundkörper. Es wird vorgeschlagen, dass die Befestigungsvorrichtung eine Gelenkeinheit zur beweglichen Verbindung des Saugschlauches mit der Handwerkzeugmaschine und/oder dem Zusatzhandgriff aufweist.

## Beschreibung

### Stand der Technik

In der DE 10 2017 219 449 A1 ist ein Absaugaufsatz für ein Einsatzwerkzeug beschrieben.

### Offenbarung der Erfindung

Die Erfindung betrifft insbesondere eine Absaughilfe für eine Handwerkzeugmaschine, mit einem Gehäuse, mit einer Aufnahme für ein Einsatzwerkzeug, mit einer Schnittstelle zur Verbindung der Absaughilfe mit einer Absaugvorrichtung, insbesondere einem Ende eines Saugschlauches der Absaugvorrichtung. Es wird vorgeschlagen, dass die Schnittstelle eine Gelenkeinheit aufweist, die dazu ausgebildet ist, die Schnittstelle beweglich mit dem Gehäuse zu verbinden. Vorteilhaft kann dadurch eine verbesserte Ergonomie des Gesamtsystems aus Absaughilfe, Handwerkzeugmaschine und Absaugvorrichtung realisiert werden.

Die Absaughilfe ist derart ausgebildet, dass eine Absaugung von Bohrklein oder Staubgut unmittelbar am Einsatzort des Einsatzwerkzeugs erfolgt. Insbesondere ist die Absaughilfe im Wesentlichen nur zur Führung des Luftstroms der Absaugvorrichtung vorgesehen. Die Absaughilfe weist vorzugsweise keine Staubsammelkammer, keine Filtereinheit und keine Gebläseeinheit auf. Die Absaughilfe ist lösbar mit dem Einsatzwerkzeug verbindbar, insbesondere axial beweglich verbindbar, ausgebildet. Die Absaughilfe weist eine Staubaufnahmeöffnung auf, über die das Staubgut in die Absaughilfe, insbesondere in das Gehäuse der Absaughilfe, eintritt. Die Staubaufnahmeöffnung ist werkstückseitig angeordnet.

Unter einer Handwerkzeugmaschine soll insbesondere eine im Betrieb handgehaltene oder handgeführte Werkzeugmaschine verstanden werden. Die Handwerkzeugmaschine kann beispielsweise als ein Netzgerät ausgebildet sein. Es ist ebenfalls denkbar, dass die Handwerkzeugmaschine als eine Akku-Handwerkzeugmaschine ausgebildet ist, wobei die Akku-Handwerkzeugmaschine vorzugsweise eine Akkuschnittstelle aufweist, über die sie mit einem Handwerkzeugmaschinenakkupack lösbar verbunden ist. Unter einer lösbaren Verbindung soll im Zusammenhang dieser Anmeldung insbesondere eine werkzeuglos lösbare Verbindung verstanden werden. Der Handwerkzeugmaschinenakkupack ist bevorzugt wechselbar ausgebildet. Die Handwerkzeugmaschine ist insbesondere zur Erzeugung eines Bohrlochs in einem Werkstück oder zum Abtragen eines Werkstücks ausgebildet. Die Handwerkzeugmaschine kann beispielsweise als eine Bohrmaschine, als ein Bohrschrauber, als ein Drehschlagbohrer, als ein Bohrhammer, als ein Abbruchhammer oder dergleichen ausgebildet sein. Die Handwerkzeugmaschine umfasst eine Antriebseinheit, die insbesondere einen Elektromotor aufweist. Die Antriebseinheit ist vorzugsweise über eine Getriebeeinheit mit der Werkzeugaufnahme zur Übertragung einer Antriebsbewegung ausgebildet. Die Werkzeugaufnahme ist zur lösbaren Verbindung des Einsatzwerkzeugs mit der Werkzeugaufnahme vorgesehen. Das in der Werkzeugaufnahme aufgenommene Einsatzwerkzeug ist rotierend um und/oder linear oszillierend entlang einer Arbeitsachse der Handwerkzeugmaschine antreibbar ausgebildet.

Die Absaugvorrichtung ist insbesondere zur Absaugung von Bohrklein oder Bohrstaub beim Bohren oder aus einem Bohrloch ausgebildet. Die Absaugvorrichtung ist insbesondere als ein Staubsauger oder als ein Industriesauger ausgebildet. Die Absaugvorrichtung weist insbesondere einen vorzugsweise lösbaren Saugschlauch aus. Der durch die Absaugvorrichtung erzeugte Luftstrom wird mittels der Absaughilfe zum Bearbeitungsort des Einsatzwerkzeugs geführt. Die Absaugvorrichtung umfasst eine Gebläseeinheit, die ein Lüfterelement umfasst. Das Lüfterelement kann beispielsweise als ein Axiallüfter, als ein Radiallüfter, als ein Diagonallüfter oder als ein Tangentiallüfter ausgebildet sein. Die Absaugvorrichtung umfasst des Weiteren eine Staubsammelkammer, die dazu ausgebildet ist, das Staubgut oder Bohrklein aufzunehmen. Des Weiteren umfasst die Absaugvorrichtung eine Filtereinheit, die vorzugsweise einen HEPA Filter aufweist. Bevorzugt umfasst die Absaugvorrichtung zudem eine Filterreinigungseinheit, die zur Reinigung der Filtereinheit ausgebildet sein. Die Filterreinigungseinheit kann beispielsweise über eine Schubumkehr erfolgen, bei der die Strömungsrichtung des Luftstroms innerhalb der Absaugvorrichtung umgekehrt wird, um die Filtereinheit per Luftstrom zu reinigen. Alternativ wäre ebenso denkbar, dass die Filterreinigungseinheit mechanisch wirkt, beispielsweise als eine Ultraschallfilterreinigung.

Das Einsatzwerkzeug kann beispielsweise als ein Bohrwerkzeug, insbesondere als ein Gesteins-, Holz- oder Metallbohrer, als ein Meißel, etc. ausgebildet sein. Das Einsatzwerkzeug ist insbesondere als ein Bohrwerkzeug ausgebildet, das für einen Bohrhammer oder eine Schlagbohrmaschine vorgesehen ist. Das Einsatzwerkzeug weist entlang seiner Längsachse ein Einsteckende, einen Schaftbereich und einen Bohrkopf auf. An seinem dem Bohrkopf abgewandten Ende weist das Einsatzwerkzeug das Einsteckende auf, das zur Kopplung mit der Handwerkzeugmaschine ausgebildet ist. Vorzugsweise ist das Einsatzwerkzeug im Bereich des Einsteckendes derart ausgebildet, dass das Einsatzwerkzeug mit einer Werkzeugaufnahme der Handwerkzeugmaschine koppelbar ist. Beispielhaft kann das Einsatzwerkzeug im Bereich des Einsteckendes als spezielle Nuten ausgebildete Formschlusselemente aufweisen, die beispielswese eine SDS-plus-Schnittstelle, eine Hex Schnittstelle, ein Zylinderschaft oder eine SDS-max-Schnittstelle bilden. Zur Bearbeitung eines Werkstücks wird das Einsatzwerkzeug mittels der Handwerkzeugmaschine in einen rotierenden und/oder linear oszillierenden bzw. schlagenden Zustand versetzt. Das Bohrwerkzeug dringt während der Bearbeitung in Vorschubrichtung des Bohrwerkzeugs in das Werkstück ein. Die Längsachse des Bohrwerkzeugs entspricht insbesondere einer Arbeits- und/oder Rotationsachse des Bohrwerkzeugs. Unter einem Bohrkopf soll in diesem Zusammenhang insbesondere ein Bereich des Bohrwerkzeugs verstanden werden, der zumindest einen Schneidkörper aufweist. Der Schneidkörper weist zumindest ein Schneidelement auf. Das zumindest eine Schneidelement kann aus einem Hartmetall ausgebildet sein. Es ist ebenso denkbar, dass die Schneideleemente aus Stahl, insbesondere HSS, ausgebildet sind

Das Gehäuse der Absaughilfe ist vorzugsweise mehrteilig ausgebildet. Das Gehäuse kann aus einem metallischen Werkstoff und/oder aus einem Kunststoff ausgebildet sein. Der Kunststoff kann aus einer Weichplastik und/oder einer Hartplastik ausgebildet sein. Die Aufnahme des Gehäuses der Absaughilfe kann einstückig oder einteilig mit dem Gehäuse der Absaughilfe ausgebildet sein. Unter einstückig sollen im Zusammenhang dieser Anmeldung zwei Bauteile bzw. Elemente verstanden werden, die aus einem Stück gefertigt sind, also nicht über eine kraft und/oder formschlüssige oder stoffschlüssige Verbindung miteinander verbunden sind. Unter einteilig soll im Zusammenhang dieser Anmeldung zumindest zwei Bauteile verstanden werden, die stoffschlüssig miteinander verbunden sind. Die Aufnahme ist insbesondere dazu ausgebildet, die Absaughilfe im mit dem Einsatzwerkzeug verbundenen Zustand gegen ein Fallen zu sichern. Die Aufnahme erstreckt sich zwischen zwei Öffnungen, über die das Einsatzwerkzeug vorzugsweise aufnehmbar ist. Im verbundenen Zustand weist die Aufnahme eine werkstückseitig angeordnete Öffnung und eine handwerkzeugmaschinenseitig angeordnete Öffnung auf. Die Öffnungen weisen insbesondere einen größeren Durchmesser auf, als ein Durchmesser des Einsatzwerkzeugs, insbesondere als ein Durchmesser des Bohrkopfs des Einsatzwerkzeugs. Die Aufnahme weist eine Außenfläche auf, die dem Einsatzwerkzeug zugewandt ist. Die Außenfläche der Aufnahme kann aus einem Kunststoff oder vorzugsweise zumindest teilweise aus einem metallischen Werkstoff ausgebildet sein. Die Aufnahme umschließt das Einsatzwerkzeug im verbundenen Zustand zumindest bereichsweise im Wesentlichen vollständig.

Die Schnittstelle zur Verbindung der Absaughilfe mit der Absaugvorrichtung ist zur insbesondere werkzeuglos lösbaren Verbindung vorgesehen. Die Verbindung kann beispielsweise über eine kraft- und/oder formschlüssige Verbindung erfolgen. Beispielsweise kann die Schnittstelle als ein zylindrischer oder konusförmiger Stutzen ausgebildet sein, wobei das Ende des Saugschlauches ebenfalls konusförmig oder zylindrisch zur Bildung eines Kraftschlusses ausgebildet ist. Alternativ oder zusätzlich kann die Schnittstelle zumindest ein Rastelement zur Herstellung einer Rastverbindung aufweisen. Es ist ebenfalls denkbar, dass die Schnittstelle als ein Bayonettverschluss ausgebildet ist.

Die Gelenkeinheit weist zumindest zwei Gelenkelemente auf, die relativ zueinander beweglich ausgebildet sind. Das Gelenkelement ist vorzugsweise einteilig oder einstückig mit dem Gehäuse und/oder der Schnittstelle ausgebildet. Die Gelenkeinheit kann beispielsweise als ein Kugelgelenk, als ein Eigelenk, als ein Sattelgelenk, als ein Scharniergelenk oder als ein Zapfengelenk ausgebildet sein.

Des Weiteren wird vorgeschlagen, dass die Schnittstelle derart beweglich ausgebildet ist, dass die Schnittstelle genau einen ersten rotatorischen Freiheitsgrad aufweist. Der erste rotatorische Freiheitsgrad ist insbesondere derart ausgebildet, dass die Schnittstelle um eine Achse drehbar ausgebildet ist, die sich windschief und senkrecht zu einer Aufnahmeachse der Aufnahme erstreckt. Die Aufnahmeachse verläuft koaxial zu der Längsachse des aufzunehmenden Einsatzwerkzeugs. Insbesondere ist der rotatorische Freiheitsgrad derart ausgebildet, dass die Schnittstelle auf einem vorzugsweise kürzesten Weg in Richtung der Aufnahmeachse oder in Richtung des Einsatzwerkzeugs beweglich ist.

Weiterhin wird vorgeschlagen, dass die Schnittstelle derart beweglich ausgebildet ist, dass die Schnittstelle zumindest zwei rotatorische Freiheitsgrade aufweist. Vorteilhaft kann dadurch die Beweglichkeit der Schnittstelle weiter verbessert werden. Die rotatorischen Freiheitsgrade sind senkrecht zueinander angeordnet. Der zweite rotatorische Freiheitsgrad ist insbesondere kreuzend, vorzugsweise senkrecht, zu der Aufnahmeachse ausgebildet.

Zudem wird vorgeschlagen, dass die Gelenkeinheit derart ausgebildet ist, dass die Schnittstelle in einem Winkelbereich von zumindest 45°, vorzugsweise zumindest 90°, bevorzugt zumindest 120°, schwenkbar ist. Vorteilhaft kann dadurch die Ergonomie weiter verbessert werden. Der Winkelbereich ist vorzugsweise entlang des ersten rotatorischen Freiheitsgrads ausgebildet.

Des Weiteren wird vorgeschlagen, dass eine Verbindungsachse, entlang der die Absaugvorrichtung, insbesondere der Saugschlauch der Absaugvorrichtung, mit der Absaughilfe verbindbar ist, in zumindest einem Zustand im Wesentlichen parallel zu einer Aufnahmeachse ausgebildet ist, entlang der sich die Aufnahme des Gehäuses der Absaughilfe erstreckt. Vorteilhaft kann hierdurch die Absaughilfe strömungstechnisch optimiert werden. Die Verbindung kann ausschließlich über eine Linearbewegung entlang der Verbindungsachse oder teilweise über eine Linearbewegung entlang der Verbindungsachse erfolgen. Vorzugsweise ist die Verbindungsachse in zumindest einem Zustand im Wesentlichen senkrecht zu der Aufnahmeachse ausgebildet.

Weiterhin wird vorgeschlagen, dass die Aufnahme ein Aufnahmeelement und ein Federelement aufweist, wobei das Federelement das Aufnahmeelement mit einer Kraft beaufschlagt. Vorteilhaft kann dadurch ein Kippen der Absaughilfe auf dem Einsatzwerkzeug verhindert werden, wodurch die Absaugleistung erhöht wird. Das Aufnahmeelement begrenzt den von der Aufnahme aufgespannten Aufnahmebereich teilweise. Das Aufnahmeelement kann aus einem metallischen Werkstoff oder einem Kunststoff ausgebildet sein. Das Aufnahmeelement ist beweglich im Gehäuse der Absaughilfe gelagert. Vorzugsweise ist das Aufnahmeelement linearbeweglich im Gehäuse gelagert. Das Aufnahmeelement kann ein Führungselement, beispielsweise einen Führungszapfen aufweisen, das zur Führung der Linearbewegung vorgesehen ist. Vorzugsweise weist das Aufnahmeelement einen einzelnen translatorischen und/oder einen einzelnen rotatorischen Freiheitsgrad auf.

Unter einem Federelement soll im Zusammenhang dieser Anmeldung insbesondere ein Bauteil verstanden werden, dass elastisch verformbar ist und vorzugsweise aus einem Metall besteht. Es wäre allerdings auch denkbar, dass das Federelement aus einem Kunststoff, insbesondere einem Hartplastik, besteht. Das Federelement kann beispielsweise als eine Biegefeder, insbesondere eine Blattfeder oder eine Drahtfeder, ausgebildet sein. Alternativ ist auch denkbar, dass das Federelement als eine Torsionsfeder, insbesondere eine Stabfeder oder eine Schraubenfeder, ausgebildet ist. Auch andere Ausbildungen sind denkbar, beispielsweise eine Tellerfeder, eine Evolutfeder, eine Ringfeder eine Luft- oder Gasfeder, oder dergleichen. Alternativ oder zusätzlich ist ebenso denkbar, dass das Aufnahmeelement schwenkbar im Gehäuse der Absaughilfe gelagert ist. Alternativ ist auch denkbar, dass das Aufnahmeelement aus einem Rohrelement besteht, beispielsweise aus einem Metallrohr.

Vorzugsweise weist die Aufnahme zumindest ein Betätigungselement auf, über das der Aufnahmebereich vergrößerbar ist. Vorteilhaft kann dadurch die Verbindung der Absaughilfe mit dem Einsatzwerkzeug vereinfacht werden. Das Betätigungselement ist vorzugsweise mechanisch mit dem Aufnahmeelement derart gekoppelt, dass eine Bewegung des Betätigungselements eine Bewegung des Aufnahmeelements zur Folge hat. Das Betätigungselement ist bevorzugt einstückig oder einteilig mit dem Aufnahmeelement ausgebildet. Das Betätigungselement ist insbesondere zur manuellen Betätigung durch einen Benutzer ausgebildet.

Zudem wird vorgeschlagen, dass das Aufnahmeelement derart strömungsoptimiert ausgebildet ist, dass das Aufnahmeelement einen beabstandet zu der Aufnahme ausgebildeten Luftkanal teilweise oder vollständig begrenzt. Vorteilhaft kann dadurch beispielsweise ein Leckageluftkanal bereitgestellt werden. Der Luftkanal ist insbesondere derart ausgebildet, dass im nicht mit dem Einsatzwerkzeug verbundenen Zustand der Luftkanal größer ist, als im mit dem Einsatzwerkzeug verbundenen Zustand. Der Luftkanal ist insbesondere auf einer dem Einsatzwerkzeug abgewandten Seite des Aufnahmeelements angeordnet.

Des Weiteren wird vorgeschlagen, dass das Gehäuse einen ersten Luftkanal zur Ansaugung von Frischluft und einen zweiten Luftkanal zur Absaugung des Bohrkleins aufweist, wobei das Gehäuse einen Verbindungsbereich bildet, der zur strömungstechnischen Verbindung der beiden Luftkanäle im am Werkstück anliegenden Zustand der Absaughilfe ausgebildet ist. Die Luftkanäle können sich im Wesentlichen geradlinig oder auch gekrümmt erstrecken. Vorzugsweise weist die Absaughilfe zumindest zwei erste Luftkanäle auf, wobei einer der ersten Luftkanäle durch die Aufnahme gebildet wird. Es ist ebenso denkbar, dass einer der ersten Luftkanäle beabstandet zu der Aufnahme und parallel zur Aufnahme verläuft. Insbesondere verläuft zumindest einer der erste Luftkanäle gekrümmt oder entlang einer Kreisbahn um die Aufnahmeachse.

Weiterhin wird vorgeschlagen, dass das Gehäuse ein Abstützelement aufweist, das zur Vergrößerung der Anlagefläche der Absaughilfe ausgebildet ist. Vorteilhaft kann dadurch ein Verkippen der Absaughilfe am Werkstück minimiert werden. Das Gehäuse der Absaughilfe weist eine Anlagefläche auf, die den Verbindungsbereich begrenzt. Vorzugsweise ist das Abstützelement beabstandet zu der Anlagefläche angeordnet. Insbesondere ist der Abstand zwischen dem Abstützelement und der Anlagefläche größer als 10% des Durchmessers der Anlagefläche, vorzugsweise größer als 25% des Durchmessers der Anlagefläche, bevorzugt größer als der Durchmesser der Anlagefläche ist. Das Abstützelement ist vorzugsweise einteilig oder einstückig mit dem Gehäuse ausgebildet. Das Abstützelement weist eine Abstützanlagefläche auf, die einen Durchmesser aufweist, der zumindest 25% des Durchmesser der Anlagefläche, vorzugsweise zumindest 50% des Durchmessers der Anlagefläche, entspricht.

Zudem wird vorgeschlagen, dass die Absaughilfe im Verbindungsbereich ein Luftleitelement aufweist, wobei das Luftleitelement dazu ausgebildet ist, den an der Wand mit staubversetzter Luft beaufschlagten Bereich zu verkleinern. Vorteilhaft wird dadurch die Absaugeffizienz weiter verbessert. Insbesondere ist das Luftleitelement derart ausgebildet, dass die Fläche an der Wand, die mit staubversetzter Luft im Betrieb in Kontakt kommt, kleiner ist als 75% des von der Anlagefläche aufgespannten Bereichs, vorzugsweise kleiner ist als 50% des von der Anlagefläche aufgespannten Bereichs, bevorzugt kleiner ist als 25% des von der Anlagefläche aufgespannten Bereichs. Das Luftleitelement ist vorzugsweise einteilig oder einstückig mit dem Gehäuse der Absaughilfe ausgebildet.

Des Weiteren betrifft die Erfindung eine Befestigungsvorrichtung für einen Saugschlauch, mit einem Grundkörper, mit einer ersten Befestigungsschnittstelle zur insbesondere werkzeuglos lösbaren Befestigung des Grundkörpers an einer Handwerkzeugmaschine und/oder einem Zusatzhandgriff und mit einer zweiten Befestigungsschnittstelle zur insbesondere werkzeuglos lösbaren Befestigung des Saugschlauches an dem Grundkörper. Es wird vorgeschlagen, dass die Befestigungsvorrichtung eine Gelenkeinheit zur beweglichen Verbindung des Saugschlauches mit der Handwerkzeugmaschine und/oder dem Zusatzhandgriff aufweist.

Die Befestigungsvorrichtung ist zur insbesondere werkzeuglos lösbaren Verbindung des Saugschlauches mit der Handwerkzeugmaschine oder dem Zusatzhandgriff ausgebildet. Unter einem Zusatzhandgriff soll insbesondere ein werkzeuglos mit einem Gehäuse der Handwerkzeugmaschine verbindbarer Handgriff verstanden werden, der vorzugsweise bei schweren Handwerkzeugmaschinen wie beispielsweise Bohrhämmern oder Winkelschleifern eingesetzt wird. Die Befestigungsvorrichtung kann eine oder mehrere Gelenkeinheiten aufweisen. Vorzugsweise weist die Befestigungsvorrichtung zumindest zwei Gelenkeinheiten auf, wobei eine Gelenkeinheit der ersten Befestigungsschnittstelle und die andere Gelenkeinheit der zweiten Befestigungsschnittstelle zugeordnet ist.

Der Grundkörper der Befestigungsvorrichtung kann aus einem Kunststoff oder einem metallischen Werkstoff ausgebildet sein. Die erste und die zweite Befestigungsschnittstelle können teilweise einstückig mit dem Grundkörper ausgebildet sein. Die Gelenkeinheit der Befestigungsvorrichtung kann dazu ausgebildet sein, der Grundkörper relativ beweglich an der Handwerkzeugmaschine und/oder dem Zusatzhandgriff zu befestigen. Alternativ ist denkbar, dass die Gelenkeinheit dazu ausgebildet ist, die zweite Befestigungsschnittstelle zumindest teilweise relativ beweglich an dem Grundkörper zu befestigen.

Weiterhin wird vorgeschlagen, dass die Gelenkeinheit ein Rückstellelement aufweist. Vorteilhaft kann dadurch eine bessere Bedienbarkeit der Befestigungsvorrichtung realisiert werden. Das Rückstellelement kann insbesondere als ein Federelement ausgebildet sein. Das Rückstellelement kann im oder am Grundkörper der Befestigungsvorrichtung angeordnet sein. Insbesondere ist das Rückstellelement dazu ausgebildet, ein Gelenkelement der Gelenkeinheit mit einer Kraft zu beaufschlagen. Vorzugsweise ist das Rückstellelement zwischen zwei Gelenkelementen angeordnet. Bevorzugt liegt das Rückstellelement unmittelbar an zumindest einem, vorzugsweise an zumindest zwei, Gelenkelementen der Gelenkeinheit an.

Zudem wird vorgeschlagen, dass die erste Befestigungsschnittstelle zumindest zwei Positionierungselemente aufweist, wobei die Positionierungselemente zur kraft- und/oder formschlüssigen Verbindung der Befestigungsvorrichtung mit der Handwerkzeugmaschine und/oder dem Zusatzhandgriff ausgebildet sind, wobei die Handwerkzeugmaschine und/oder der Zusatzhandgriff im mit dem ersten Positionierungselement verbundenen Zustand einen größeren Abstand zu der zweiten Befestigungsschnittstelle und/oder zu der Absaughilfe aufweist, als im mit dem zweiten Positionierungselement verbundenen Zustand. Vorteilhaft kann dadurch das System bestehend aus der Befestigungsvorrichtung und der Absaughilfe optimal auf unterschiedliche Längen von Einsatzwerkzeugen angepasst werden. Die Positionierungselemente sind vorzugsweise im Wesentlichen identisch ausgebildet. Die Positionierungselemente können in einer Reihe oder versetzt zueinander angeordnet sein.

Des Weiteren wird vorgeschlagen, dass die zweite Befestigungsschnittstelle zumindest ein erstes Befestigungselement aufweist, das dazu ausgebildet ist, im befestigten Zustand am Saugschlauch anzuliegen oder den Saugschlauch teilweise zu umgreifen. Das erste Befestigungselement ist vorzugsweise starr ausgebildet. Das erste Befestigungselement kann beispielsweise aus einem Kunststoff, insbesondere aus einer Hartplastik, ausgebildet sein. Das erste Befestigungselement kann auf einer dem Saugschlauch zugewandten Seite an die Größe und/oder Kontur des Saugschlauches angepasst sein. Die Anpassung kann beispielsweise als in Umfangsrichtung verlaufende Stege ausgebildet sein, die in Rillen des Saugschlauches greifen.

Weiterhin wird vorgeschlagen, dass die zweite Befestigungsschnittstelle zumindest ein zweites Befestigungselement aufweist, das relativ zum ersten Befestigungselement beweglich ausgebildet ist. Vorteilhaft kann dadurch eine flexible Befestigung von Saugschläuchen unterschiedlicher Größe realisiert werden. Das zweite Befestigungselement ist insbesondere elastisch und/oder leicht biegbar ausgebildet. Das zweite Befestigungselement kann lösbar mit dem ersten Befestigungselement verbunden sein. Das zweite Befestigungselement ist vorzugsweise aus einem elastischen Kunststoff, insbesondere einer Weichplastik, ausgebildet. Insbesondere weist das erste Befestigungselement zumindest ein Führungselement auf, das zur Führung des zweiten Befestigungselements ausgebildet ist. Das Führungselement kann beispielsweise als eine Ausnehmung oder ein Durchgang im ersten Befestigungselement ausgebildet sein. Vorzugsweise weist das zweite Befestigungselement zumindest zwei Verbindungsmittel auf, die zueinander korrespondieren und mittels derer das zweite Befestigungselement mit sich selbst kraft- und/oder formschlüssig verbindbar ist. Das zweite Befestigungselement ist vorzugsweise als ein Kabelbinderelement ausgebildet. Das Kabelbinderelement ist vorzugsweise als ein Mehrwegkabelbinderelement ausgebildet.

Zudem wird vorgeschlagen, dass die zweite Befestigungsschnittstelle teilweise oder vollständig lösbar mit dem Grundkörper verbindbar ist. Vorteilhaft kann dadurch ein schnelleres Lösen und Wiederverbinden mit dem Saugschlauch realisiert werden. Insbesondere ist das erste und das zweite Befestigungselement werkzeuglos lösbar mit dem Grundkörper verbunden. Insbesondere weist das erste Befestigungselement auf einer dem Saugschlauch abgewandten Seite ein Verbindungselement zur Verbindung mit dem Grundkörper auf. Das Verbindungselement kann als ein Kraft- und/oder Formschlusselement, insbesondere als ein Rastelement, ausgebildet sein.

Des Weiteren betrifft die Erfindung ein System umfassend eine Absaughilfe wie zuvor beschrieben mit einer Gelenkeinheit und eine Befestigungsvorrichtung wie zuvor beschrieben mit einer Gelenkeinheit. Vorteilhaft kann dadurch eine optimale Anbindung des Saugschlauches an die Handwerkzeugmaschine realisiert werden. Insbesondere weist die Absaughilfe eine Gelenkachse auf, die im Wesentlichen parallel zu einer Gelenkachse der Befestigungsvorrichtung ausgebildet ist. Bei der Bearbeitung eines Werkstücks tritt das Einsatzwerkzeug in das Werkstück ein und die Absaughilfe wird relativ zum Bohrkopf des Einsatzwerkzeugs nach hinten verschoben, hierdurch verkürzt sich der Abstand zwischen der Absaughilfe und der Befestigungsvorrichtung. Die Gelenkeinheit sind vorzugsweise derart ausgerichtet, dass bei einer Bewegung der Absaughilfe in Richtung der Befestigungsvorrichtung sich die beiden Gelenkeinheiten in entgegengesetzte Richtungen drehen.

Zudem wird vorgeschlagen, dass das System ein weiteres Befestigungsmittel zur Verbindung eines Saugschlauches an einer Handwerkzeugmaschine aufweist. Vorteilhaft kann dadurch die Anbindung weiter verbessert werden. Das weitere Befestigungsmittel kann beispielsweise als ein Kabelbinderelement ausgebildet sein.

Des Weiteren wird vorgeschlagen, dass die Gelenkeinheit der Absaughilfe und/oder die Gelenkeinheit der Befestigungsvorrichtung ein Rückstellelement umfassen, das derart ausgebildet ist, dass die Absaughilfe im mit der Befestigungsvorrichtung über einen Saugschlauch verbundenen Zustand mit einer Kraft beaufschlagt wird, die der Befestigungsvorrichtung entgegengesetzt ist. Insbesondere ist die Kraft teilweise oder vollständig entlang der Vorschubrichtung des Einsatzwerkzeugs gerichtet.

Weiterhin betrifft die Erfindung insbesondere ein System umfassend eine Absaughilfe und eine Befestigungsvorrichtung für eine Handwerkzeugmaschine mit einem entkoppelten Außengehäuse, mit einer ersten Befestigungsschnittstelle zur Befestigung der Befestigungsvorrichtung an der Handwerkzeugmaschine und mit einer zweiten Befestigungsschnittstelle zur Befestigung des Saugschlauches an der Befestigungsvorrichtung. Es wird vorgeschlagen, dass die Befestigungsvorrichtung eine Verstärkungseinheit, insbesondere eine Gelenkeinheit, aufweist, die dazu ausgebildet ist, eine Relativbewegung des entkoppelten Außengehäuses verstärkt auf die zweite Befestigungsschnittstelle zu übertragen. Vorteilhaft kann dadurch die Absaugung optimiert werden. Es sind auch andere Ausgestaltung der Verstärkungseinheit denkbar, beispielsweise ein Seilzug oder mittels Zahnradfragmenten. Unter einem entkoppelten Außengehäuse soll im Zusammenhang dieser Anmeldung insbesondere ein Außengehäuseteil verstanden werden, das zu einem weiteren Außengehäuseteil oder einem Innengehäuseteil über eine Dämpfungseinheit zur Reduzierung von Vibrationen verbunden ist. Das entkoppelte Außengehäuse unterliegt beim Ansetzen der Handwerkzeugmaschine an das Werkstück einer Relativbewegung zu der Werkzeugaufnahme und/oder dem weiteren Außengehäuseteil oder dem Innengehäuseteil, die zur optimalen Positionierung der Absaughilfe kompensiert werden muss. Insbesondere ist die Gelenkeinheit der ersten Befestigungsschnittstelle zugeordnet. Die Verstärkungseinheit ist insbesondere dazu ausgebildet, eine Relativbewegung der Außengehäuseteile in einer Richtung derart verstärkt auf die zweite Befestigungsschnittstelle zu übertragen, dass eine Bewegung der zweiten Befestigungsschnittstelle vorzugsweise in dieselbe Richtung zumindest verdoppelt, bevorzugt zumindest verdreifacht, wird. Insbesondere ist die Verstärkungseinheit derart ausgebildet, dass bei einer Verkleinerung des Abstands zwischen dem entkoppelten Außengehäuse und der Werkzeugaufnahme ein Abstand zwischen der Werkzeugaufnahme und der Absaughilfe vergrößert wird, wobei ein Betrag der Vergrößerung entlang der Arbeitsachse größer ist, als ein Betrag der Verkleinerung entlang der Arbeitsachse. Vorteilhaft kann dadurch realisiert werden, dass beim Ansetzen eines Einsatzwerkzeugs, insbesondere eines Meißels, die sichtbehindernde Absaughilfe ausreichend zurückgezogen ist und beim stauberzeugenden Meißeln die Absaughilfe möglichst nah an der zu bearbeitenden Werkstückoberfläche ist.

Zudem wird vorgeschlagen, dass die erste Befestigungsschnittstelle und die zweite Befestigungsschnittstelle als ein Hebel ausgebildet sind. Vorteilhaft kann dadurch eine Wegverstärkung realisiert werden. Der Hebel ist insbesondere als ein einseitiger Hebel ausgebildet, bei dem nur auf einer Seite ein Drehpunkt angeordnet ist. Alternativ wäre ebenso denkbar, dass der Hebel als ein zweiseitiger Hebel mit zumindest zwei Drehpunkten oder Drehachsen ausgebildet ist. Es wäre ebenso denkbar, dass der Hebel als ein Winkelhebel ausgebildet sein kann. Insbesondere ist die zweite Befestigungsschnittstelle im Wesentlichen starr ausgebildet. Vorzugsweise umfasst die erste Befestigungsschnittstelle eine Drehachse, um die die zweite Befestigungsschnittstelle drehbar ist. Bevorzugt ist die Drehachse windschief und senkrecht zu einer Arbeitsachse der Handwerkzeugmaschine ausgebildet. Vorzugsweise ist die Drehachse relativ zu der zweiten Befestigungsschnittstelle beweglich ausgebildet.

Des Weiteren wird vorgeschlagen, dass die Gelenkeinheit zwei Gelenkelemente aufweist, wobei ein erstes Gelenkelement an einem ersten Gehäuseteil der Handwerkzeugmaschine und ein zweites Gelenkelement an einem zweiten Gehäuseteil der Handwerkzeugmaschine befestigt ist. Die Befestigung kann jeweils werkzeuglos lösbar oder nicht werkzeuglos lösbar ausgebildet sein. Das erste Gehäuseteil und das zweite Gehäuseteil sind insbesondere als Außengehäuseteile ausgebildet. Vorzugsweise sind die Gelenkelemente fest oder lösbar mit dem ersten und/oder dem zweiten Gehäuseteil der Handwerkzeugmaschine verbunden.

Weiterhin betrifft die Erfindung insbesondere eine Handwerkzeugmaschine mit einem Gehäuse, mit einem ersten Gehäuseteil und einem zweiten Gehäuseteil, wobei zumindest das zweite Gehäuseteil als ein zu dem ersten Gehäuseteil entkoppeltes Außengehäuseteil ausgebildet ist, und mit einer Befestigungsvorrichtung für einen Saugschlauch, wobei die Befestigungsvorrichtung eine erste Befestigungsschnittstelle zur Befestigung der Befestigungsvorrichtung an der Handwerkzeugmaschine und eine zweite Befestigungsschnittstelle zur Befestigung des Saugschlauches an der Befestigungsvorrichtung aufweist. Es wird vorgeschlagen, dass die Befestigungsvorrichtung eine Verstärkungseinheit, insbesondere eine Gelenkeinheit, aufweist, die dazu ausgebildet ist, eine Relativbewegung der Gehäuseteile zueinander verstärkt auf die zweite Befestigungsschnittstelle zu übertragen. Vorteilhaft kann dadurch eine optimale Absaugleistung realisiert werden. Die Handwerkzeugmaschine ist insbesondere als ein Abbruchhammer ausgebildet.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1a eine Seitenansicht einer Absaughilfe und einer Befestigungsvorrichtung im an einer Handwerkzeugmaschine befestigten Zustand;
Fig. 1b eine Seitenansicht der Absaughilfe und der Befestigungsvorrichtung im an der Handwerkzeugmaschine befestigten Zustand gemäß Fig. 1a während des Bohrvorgangs;
Fig. 2a einen Längsschnitt der Absaughilfe gemäß Fig. 1a;
Fig. 2b eine Seitenansicht der Absaughilfe gemäß Fig. 1a mit teilweise demontierten Gehäuse;
Fig. 2c Eine Seitenansicht der Absaughilfe gemäß Fig. 2b ohne Schnittelle;
Fig. 2d eine perspektivische Ansicht der Absaughilfe gemäß Fig. 1a;
Fig. 3a eine Seitenansicht der Befestigungsvorrichtung gemäß Fig. 1a;
Fig. 3b eine perspektivische Ansicht der Befestigungsvorrichtung;
Fig. 3c ein Längsschnitt durch die Befestigungsvorrichtung gemäß Fig. 3b;
Fig. 3d eine perspektivische Ansicht einer zweiten Befestigungsschnittstelle der Befestigungsvorrichtung gemäß Fig. 3a;
Fig. 4a eine perspektivische Ansicht einer alternativen Ausführungsform einer Befestigungsvorrichtung;
Fig. 4b eine weitere perspektivische Ansicht der Befestigungsvorrichtung gemäß Fig. 4a;
Fig. 4c eine perspektivische Ansicht eines Grundkörpers der Befestigungsvorrichtung gemäß Fig. 4a;
Fig. 4d eine Seitenansicht eines Befestigungselements der Befestigungsvorrichtung gemäß Fig. 4a;
Fig. 4e eine Seitenansicht einer Absaughilfe, eines Adapters für einen Saugschlauch und des Saugschlauches;
Fig. 5 eine Seitenansicht einer weiteren alternativen Ausführungsform einer Befestigungsvorrichtung;
Fig. 6 eine perspektivische Ansicht einer alternativen Ausführungsform einer Absaughilfe;
Fig. 7 eine perspektivische Ansicht einer weiteren alternativen Ausführungsform einer Absaughilfe;
Fig. 8a eine Seitenansicht eines Abbruchhammers mit einer Befestigungsvorrichtung und einer Absaughilfe beim Ansetzen des Abbruchhammers;
Fig. 8b eine Seitenansicht eines Abbruchhammers mit einer Befestigungsvorrichtung und einer Absaughilfe während des Arbeitsvorgangs;
Fig. 9 eine perspektivische Ansicht einer zusätzlichen alternativen Ausführungsform einer Absaughilfe.

### Beschreibung der Ausführungsbeispiele

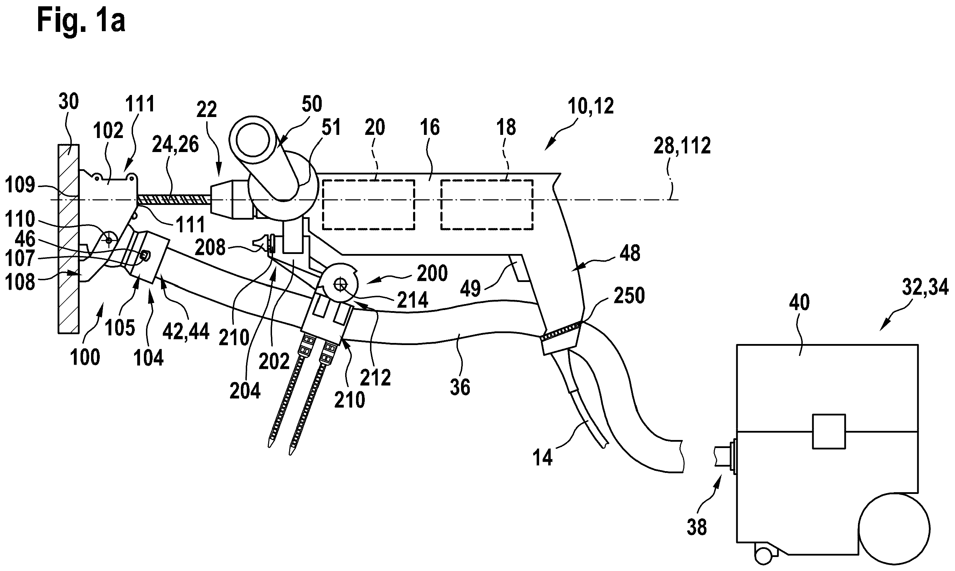

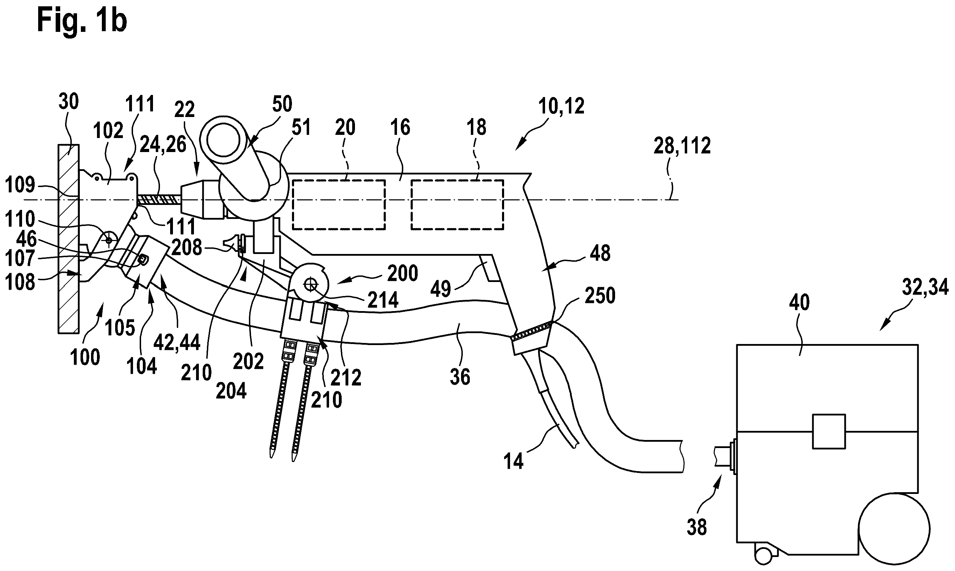

In Fig. 1 ist eine Handwerkzeugmaschine 10, die mit Absaughilfe 100 und einer Befestigungsvorrichtung 200 verbunden ist, in einer Seitenansicht gezeigt.

Die Handwerkzeugmaschine 10 ist beispielhaft als ein Bohrhammer 12 ausgebildet. Die Handwerkzeugmaschine 10 ist beispielhaft als eine netzgebundene Handwerkzeugmaschine 10 ausgebildet, die über ein Netzkabel 14 mit einer Energiequelle, wie einem Stromnetz verbindbar ist. Die Handwerkzeugmaschine 10 weist ein als ein Außengehäuse ausgebildetes Gehäuse 16 auf, in welchem eine einen Elektromotor umfassende Antriebseinheit 18 angeordnet ist, die über ein ein pneumatisches Schlagwerk umfassende Getriebeeinheit 20 mit einer Werkzeugaufnahme 22 verbunden ist. Die Werkzeugaufnahme 22 ist zur Aufnahme, insbesondere zur kraft- und/oder formschlüssigen Aufnahme, eines Einsatzwerkzeugs 24 ausgebildet. Das in der Werkzeugaufnahme 22 aufgenommene Einsatzwerkzeug 24 ist beispielhaft als ein Gesteinsbohrer 26 ausgebildet. Der Gesteinsbohrer weist an einem Ende ein Einsteckende auf, das beispielhaft als ein SDS-plus Einsteckende ausgebildet ist. An einem dem SDS-plus Einsteckende gegenüberliegenden Ende weist der Gesteinsbohrer 26 einen Bohrkopf auf, der einen Schneidkörper aus einem Hartmetall aufweist. Die Werkzeugaufnahme 22 der Handwerkzeugmaschine 10 ist korrespondierend zum Gesteinsbohrer 26 beispielhaft als eine SDS-plus Werkzeugaufnahme ausgebildet. Die Werkzeugaufnahme 22 ist derart mit der Antriebseinheit 18 gekoppelt, dass eine Antriebsbewegung der Antriebseinheit 18 auf das Einsatzwerkzeug 24 übertragbar ist. Das Einsatzwerkzeug 24 ist rotierend um und linear oszillierend entlang einer Arbeitsachse 28 der Handwerkzeugmaschine 10 antreibbar ausgebildet.

Das Gehäuse 16 der Handwerkzeugmaschine 10 weist einen Handgriff 48 auf, der sich im Wesentlichen senkrecht zu der Arbeitsachse 28 der Handwerkzeugmaschine 10 erstreckt. Am Handgriff 48 ist ein Betriebsschalter 49 zum Ein- und Ausschalten der Handwerkzeugmaschine 10 angeordnet. Der Handgriff 48 ist zum Halten und Führen der Handwerkzeugmaschine 10 ausgebildet. Aufgrund des Gewichts und den im Betrieb auftretenden Vibrationen weist die Handwerkzeugmaschine 10 einen Zusatzhandgriff 50 auf, über welchen eine vorteilhafte Zweihandbenutzung ermöglicht wird. Der Zusatzhandgriff 50 ist werkzeuglos lösbar mit dem Gehäuse 16 der Handwerkzeugmaschine 10 verbunden. Der Zusatzhandgriff 50 ist im Bereich der Werkzeugaufnahme 22 in unterschiedlichen Positionen mit der Handwerkzeugmaschine 10 verbindbar. In Fig. 1 ist der Zusatzhandgriff 50 derart verbunden, dass er sich im Wesentlichen senkrecht zu der Arbeitsachse 28 und senkrecht zu dem Handgriff 48 erstreckt.

Im Betrieb der Handwerkzeugmaschine 10 liegt diese mit dem Einsatzwerkzeug 24, insbesondere mit dem Bohrkopf des Einsatzwerkzeug 24, an einem Werkstück 30 an. Durch die Rotation und Schlagbewegung des Gesteinsbohrers 26 wird ein Bohrloch durch teilweises Abtragen des Werkstücks 30 erzeugt, wobei Bohrklein und Staub an der Arbeitsstelle erzeugt wird. Vorteilhaft kann das erzeugte Bohrklein über die Absaughilfe 100 unmittelbar aufgenommen und abgesaugt werden.

Die Absaughilfe 100 weist ein Gehäuse 102 auf. Die Absaughilfe 100 weist eine Schnittstelle 104 auf, die dazu ausgebildet ist, die Absaughilfe 100 mit einer Absaugvorrichtung 32 zu verbinden.

Die Absaugvorrichtung 32 ist beispielhaft als ein Industriesauger 34 ausgebildet. Die Absaugvorrichtung 32 weist ein Gewicht auf, das derart hoch ist, dass eine direkte Anbringung der Absaugvorrichtung an der Handwerkzeugmaschine 10 nicht möglich ist. Die Absaugvorrichtung weist einen Saugschlauch 36 auf. An einem ersten Ende 38 ist der Saugschlauch 36 lösbar mit einem Gehäuse 40 der Absaugvorrichtung 32 verbunden. Im Gehäuse 40 der Absaugvorrichtung 32 ist eine Antriebseinheit, die zum Antrieb einer Gebläseeinheit ausgebildet ist, angeordnet. Die Gebläseeinheit ist zur Erzeugung eines Unterdrucks zur Erzeugung eines Luftstroms ausgebildet. Des Weiteren ist in dem Gehäuse vorzugsweise eine Staubsammelkammer angeordnet, die eine Filtereinheit umfasst und zur Aufnahme des Bohrkleins oder Staubs vorgesehen ist. An einem dem ersten Ende 38 gegenüberliegenden Ende 42 weist der Saugschlauch 36 eine Kopplungsschnittstelle 44 auf.

Die Schnittstelle 104 der Absaughilfe 100 weist eine im Wesentlichen zylindrische Saugschlauchaufnahme 105 auf, die zur Verbindung des Saugschlauches 36 der Absaugvorrichtung 32 ausgebildet ist. Die Saugschlauchaufnahme 105 weist ein Kraftschlusselement 106 in Form einer im Wesentlichen zylindrisch geformten Innenfläche auf. Zudem weist die Saugschlauchaufnahme 105 ein Formschlusselement 107 in Form einer Ausnehmung in der zylindrischen Wandung auf. Die Kopplungsschnittstelle 44 des Saugschlauches 36 umfasst korrespondierende Kraft- und/oder Formschlusselemente zur kraft- und/oder formschlüssigen Verbindung des Saugschlauches 36 mit der Absaughilfe 100, insbesondere der Schnittstelle 104 der Absaughilfe 100, auf. Die Kopplungsschnittstelle 44 des Saugschlauches 36 ist in der Saugschlauchaufnahme 105 der Absaughilfe aufgenommen und kraftschlüssig in der im Wesentlichen zylindrisch geformten Innenseite gehalten. Zudem weist die Kopplungsschnittstelle 44 auf der Außenseite ein federndes Rastelement 46 auf, das im verbundenen Zustand in das als Aussparung ausgebildete Formschlusselement 107 der Saugschlauchaufnahme 105 eingreift und damit den Saugschlauch 36 gegen ein Verdrehen und axial sichert.

Die Absaughilfe 100, insbesondere das Gehäuse 102 der Absaughilfe 100, umfasst eine Aufnahme 111 zur Aufnahme des Einsatzwerkzeugs 24. Die Aufnahme 111 weist eine erste Öffnung 109 und eine zweite Öffnung 113 auf, durch die das Einsatzwerkzeug 24 durch das Gehäuse 102 der Absaughilfe 100 schiebbar ist. Die Verbindung erfolgt dabei beispielhaft entlang einer Aufnahmeachse 112, die sich zwischen den Öffnungen 109, 110 erstreckt. Im verbundenen Zustand ist die Aufnahmeachse 112 im Wesentlichen koaxial zu der Arbeitsachse 28 der Handwerkzeugmaschine 10 ausgebildet. Zwischen den beiden Öffnungen 109, 113 ist die Aufnahme 111 beispielhaft im Wesentlichen geschlossen ausgebildet. Im mit dem Einsatzwerkzeug 24 verbundenen Zustand wird die Absaughilfe 100 radial gegen ein Fallen durch das Einsatzwerkzeug 24 gesichert.

Des Weiteren umfasst die Schnittstelle 104 der Absaughilfe 100 eine Gelenkeinheit 108, die dazu ausgebildet ist, die Schnittstelle 104, insbesondere die Schnittstelle 104 und den Saugschlauch 36, beweglich mit dem Gehäuse 102 zu verbinden. Die Gelenkeinheit 108 ist derart ausgebildet, dass die Schnittstelle 104 mit dem Saugschlauch 36 um eine Drehachse 110 schwenkbar ist. Die Drehachse 110 ist senkrecht und windschief zu der Aufnahmeachse 112 der Absaughilfe 100 und/oder der Arbeitsachse 28 der Handwerkzeugmaschine 10 ausgebildet. Die Gelenkeinheit 108 ist derart ausgebildet, dass die Schnittstelle 104 in einem Winkelbereich von ungefähr 90° beweglich ist. Insbesondere ist die Schnittstelle 104 derart ausgebildet, dass die Beweglichkeit des Schnittstelle 104 in eine Richtung durch die Handwerkzeugmaschine 10 oder das Einsatzwerkzeug 24 und in die entgegengesetzte Richtung durch das Werkstück 30 begrenzt wird.

Die Befestigungsvorrichtung 200 ist zur Befestigung des Saugschlauches 36 an der Handwerkzeugmaschine 10 ausgebildet. Insbesondere ist die Befestigungsvorrichtung 200 zur Befestigung des Saugschlauches 36 an dem Zusatzhandgriff 50 der Handwerkzeugmaschine 10 ausgebildet.

Die Befestigungsvorrichtung 200 umfasst einen Grundkörper 202, der über eine erste Befestigungsschnittstelle 204 mit dem Zusatzhandgriff 50 der Handwerkzeugmaschine 10 verbunden ist. Die erste Befestigungsschnittstelle 204 umfasst ein Befestigungsmittel 206, dass lösbar mit dem Grundkörper 202 verbindbar ausgebildet sein kann.

Der Zusatzhandgriff 50 weist eine Durchgangsöffnung zur Aufnahme eines Tiefenanschlags (nicht dargestellt) auf. Das Befestigungsmittel 206 ist im Wesentlichen zylindrisch ausgebildet mit einem Außendurchmesser, der im Wesentlichen dem Durchmesser der Durchgangsöffnung des Zusatzhandgriffs 50 entspricht. Zur Verbindung der Befestigungsvorrichtung 200 mit dem Zusatzhandgriff 50 wird das Befestigungsmittel 206 durch die Durchgangsöffnung geführt und axial durch ein Sicherungselement 208 gehalten. Die erste Befestigungsschnittstelle 204 ist somit beispielhaft zur starren und lösbaren Befestigung der Befestigungsvorrichtung 200 mit der Handwerkzeugmaschine 10 bzw. dem Zusatzhandgriff 50 ausgebildet.

Zudem umfasst die Befestigungsvorrichtung 200 eine zweite Befestigungsschnittstelle 210 zur Befestigung des Saugschlauches 36 an dem Grundkörper 202 und eine Gelenkeinheit 212 zur beweglichen Verbindung Saugschlauches 36 mit der Handwerkzeugmaschine 10 und dem Zusatzhandgriff 50. Die zweite Befestigungsschnittstelle 210 bzw. der Saugschlauch 36 ist mittels der Gelenkeinheit 212 um eine Drehachse 214 drehbar ausgebildet. Die Drehachse 214 ist beispielhaft im Wesentlichen windschief und senkrecht zu der Arbeitsachse 28 der Handwerkzeugmaschine 10 ausgebildet. Vorzugsweise ist die Drehachse 214 der Gelenkeinheit 212 der Befestigungsvorrichtung 200 im Wesentlichen parallel zu der Drehachse 110 der Gelenkeinheit 108 der Absaughilfe 100 anordenbar, wobei im gezeigten Ausführungsbeispiel die Lage der Drehachse 214 der Befestigungsvorrichtung 200 von der Positionierung des Zusatzhandgriffs 50 an der Handwerkzeugmaschine 10 abhängt.

In Fig. 1b ist eine Seitenansicht der Absaughilfe 100 und der Befestigungsvorrichtung 200 im an der Handwerkzeugmaschine 10 befestigten Zustand gemäß Fig. 1a während des Bohrvorgangs gezeigt. Das Einsatzwerkzeug 24 ist teilweise in das Werkstück 30 eingedrungen und die Absaughilfe 100 wird gegen das Werkstück 30 auf dem Einsatzwerkzeug 24 in Richtung der Handwerkzeugmaschine 10 und damit in Richtung der mit der Handwerkzeugmaschine 10 verbundenen Befestigungsvorrichtung 200 axial auf dem Einsatzwerkzeug 24 verschoben. Damit diese Bewegung möglichst leichtgängig verläuft, wird der Saugschlauch 36 durch die Gelenkeinheit 108 der Absaughilfe 100 und durch die Gelenkeinheit 212 der Befestigungsvorrichtung 200 zur Entlastung geschwenkt. In der gezeigten Seitenansicht wird der Saugschlauch 36 im Bereich der Absaughilfe 100 um die Drehachse 110 der Gelenkeinheit 108 der Absaughilfe 100 im Uhrzeigersinn gedreht und im Bereich der Befestigungsvorrichtung 200 um die Drehachse 214 der Gelenkeinheit 212 der Befestigungsvorrichtung 200 entgegen des Uhrzeigersinns gedreht. Die Drehungen um die Drehachse 110 der Gelenkeinheit 108 der Absaughilfe 100 und um die Drehachse 214 der Gelenkeinheit 212 der Befestigungsvorrichtung 200 verlaufen somit gegenläufig zueinander.

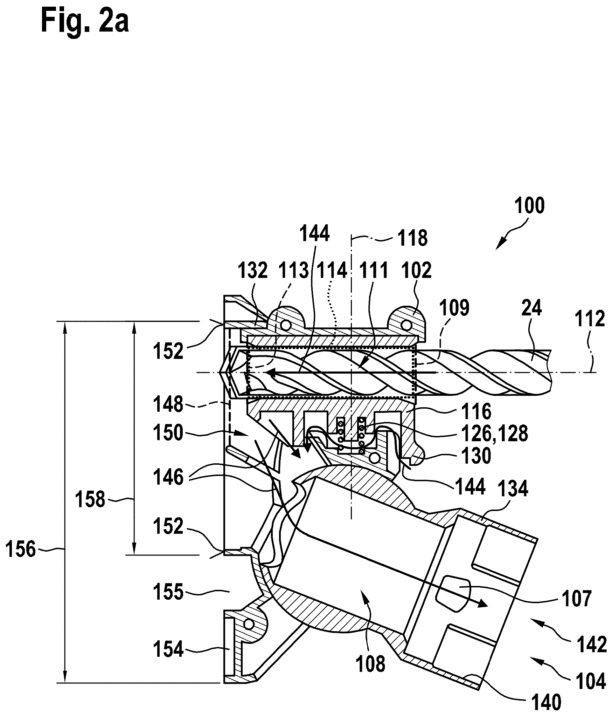

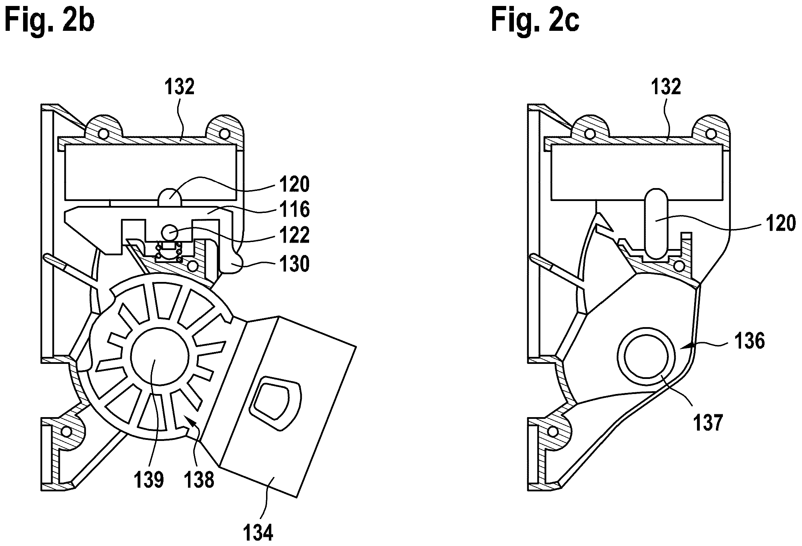

In Fig. 2a ist ein Längsschnitt durch die Absaughilfe 100 gemäß Fig. 1a mit eingesetztem Einsatzwerkzeug 24 gezeigt. Das Einsatzwerkzeug 24 ist in der Aufnahme 111 aufgenommen. Das Einsatzwerkzeug 24 wurde über die erste Öffnung 109 aufgenommen und durchdringt zudem auch die zweite Öffnung 113 der Aufnahme 111. Zwischen der ersten Öffnung 109 und der zweiten Öffnung 113 wird ein Aufnahmebereich 114 aufgespannt, der in seiner Größe anpassbar ist. Die Aufnahme 111 weist hierzu ein Aufnahmeelement 116 auf, das beweglich im Gehäuse 102 der Absaughilfe 100 angeordnet ist. Das Aufnahmeelement 116 besteht beispielhaft aus einem Kunststoff. Das Aufnahmeelement 116 ist insbesondere linear beweglich entlang einer Achse 118 ausgebildet, die sich im Wesentlichen senkrecht zu der Aufnahmeachse 112 der Aufnahme 111 erstreckt. Das Gehäuse 102 der Absaughilfe 100 weist zwei gegenüberliegende Führungsnuten 120 auf, in die korrespondierende Führungszapfen 122 (siehe Fig. 2b) des Aufnahmeelements 116 eingreifen.

Das Aufnahmeelement 116 wird mittels eines Federelements 126 mit einer Kraft entlang der Achse 118 in Richtung des Einsatzwerkzeugs 24 beaufschlagt. Vorteilhaft sitzt dadurch die Absaughilfe 100 im Wesentlichen spielfrei auf dem Einsatzwerkzeug 24 auf, womit ein Verkippen der Absaughilfe 100 gegenüber dem Einsatzwerkzeug 24 verhindert werden kann. Das Federelement 126 ist beispielhaft als eine Spiralfeder 128 ausgebildet, die zwischen dem Gehäuse 102 und dem Aufnahmeelement 116 angeordnet ist.

Insbesondere wird das Aufnahmeelement 116 derart mit einer Kraft beaufschlagt, dass der Aufnahmebereich 114 ohne eingesetztes Einsatzwerkzeug 24 am kleinsten ist. Der Aufnahmebereich 114 ist im Durchmesser ohne eingesetztes Einsatzwerkzeug 24 insbesondere kleiner als ein Durchmesser des einzusetzenden Einsatzwerkzeugs 24. Um die Aufnahme des Einsatzwerkzeugs 24 zu erleichtern, weist die Aufnahme 111 ein Betätigungselement 130 auf. Das Betätigungselement 130 ist beispielhaft einstückig mit dem beweglichen Aufnahmeelement 116 ausgebildet. Das Betätigungselement 130 ragt vollständig aus dem Gehäuse 102 der Absaughilfe 100 hinaus und ist vorzugsweise derart geformt, dass über das Betätigungselement 130 manuell vom Benutzer eine Kraft entgegen der Federkraft des Federelements 126 aufgebracht werden kann, um den Aufnahmebereich 114 zu vergrößern.

Das Gehäuse 102 der Absaughilfe 100 umfasst zwei Gehäusehalbschalen 132, die miteinander über eine Schaubverbindung verbunden sind. Alternativ sind auch andere Ausbildungsarten des Gehäuses 102 denkbar. Insbesondere sind auch andere Verbindungsarten, wie beispielsweise ineinander Stecken, denkbar. In den Gehäusehalbschalen 132 ist das Aufnahmeelement 116 und ein weiteres Schnittstellengehäuseteil 134, welches die Schnittstelle 104 umfasst, angeordnet.

In Fig. 2b ist eine Seitenansicht einer der Gehäusehalbschalen 132 mit eingesetztem Aufnahmeelement 116 und eingesetztem Schnittstellengehäuseteil 134 gezeigt. In Fig. 2c ist eine Seitenansicht, die nur die Gehäusehalbschale 132 zeigt, dargestellt. Die Gelenkeinheit 108 der Absaughilfe 100 ist beispielhaft als ein Drehgelenk ausgebildet. Die Gelenkeinheit 108 der Absaughilfe 100 umfasst zwei Gelenkelemente 136, 138 die relativ zueinander beweglich ausgebildet sind. Das erste Gelenkelement 136 ist beispielhaft als zwei gegenüberliegende konusförmige und hohlzylindrische Zapfen 137 ausgebildet, die einstückig mit den Gehäusehalbschalen 132 ausgebildet und an deren Innenseite angeordnet sind. Die zweiten Gelenkelemente 138 sind einstückig mit dem Schnittstellengehäuseteil 134 ausgebildet und an dessen Außenseite angeordnet. Korrespondierend zu den als Zapfen 137 ausgebildeten ersten Gelenkelementen 136 ist das zweite Gelenkelement 138 als zwei gegenüberliegende zylindrische Aufnahmen 139 ausgebildet. Im verbundenen Zustand ist somit das Schnittstellengehäuseteil 134 gegenüber den Gehäusehalbschalen 132 um die Drehachse 110 drehbar ausgebildet.

Das Schnittstellengehäuseteil 134 ist teilweise als ein Innengehäuse und teilweise als ein Außengehäuse ausgebildet. Der Bereich, der als Innengehäuse ausgebildet ist umfasst dabei das zweite Gelenkelement 138 und der Bereich, der das Außengehäuse bildet, umfasst die Schnittstelle 104 zur werkzeuglos lösbaren Verbindung mit dem Saugschlauch 36. Die Schnittstelle 104 umfasst zwei gegenüberliegende Ausnehmungen 107 in der Wandung sowie eine Durchmesservergrößerung 140 im Bereich der für den Saugschlauch 36 vorgesehenen Öffnung 142 der Absaughilfe 100.

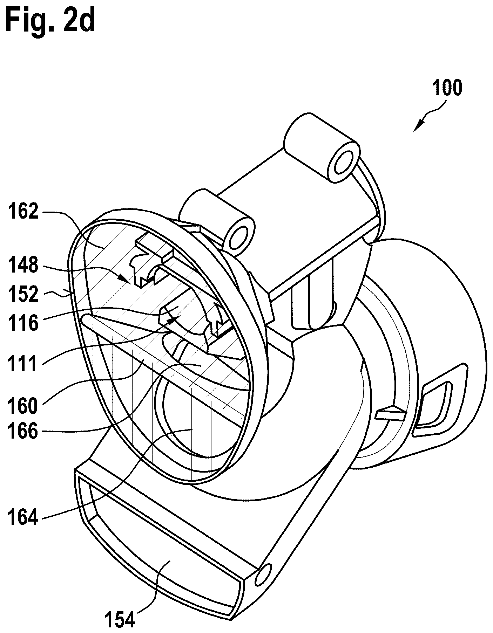

Die Absaughilfe 100 weist beispielhaft zwei erste Luftkanäle 144 (siehe Fig. 2d) zur Ansaugung von Frischluft und beispielhaft einen einzelnen zweiten Luftkanal 146 zur Absaugung des Bohrkleins auf.

Einer der ersten Luftkanäle 144 wird durch die Aufnahme 111 gebildet. Die Aufnahme 111 ist derart geformt, dass auch bei eingesetztem Einsatzwerkzeug 24 diese nicht vollständig durch das Einsatzwerkzeug 24 ausgefüllt ist und somit ein Luftstrom das Einsatzwerkzeug 24 in der Aufnahme 111 insbesondere seitlich passieren kann.

Der weitere erste Luftkanal 144 ist in einem Bereich zwischen dem Gehäuse 102, insbesondere der Gelenkeinheit 108, und dem Aufnahmeelement 116 angeordnet. Insbesondere wird der weitere erste Luftkanal 144 durch das Aufnahmeelement 116 begrenzt. Die Größe bzw. der Querschnitt des weiteren ersten Luftkanals 144 ist insbesondere variabel ausgebildet. Abhängig von der Position des Aufnahmeelements 116 ergeben sich unterschiedliche Querschnitte für den weiteren ersten Luftkanal 144. Vorteilhaft kann dadurch bei kleineren Bohrwerkzeugen ein größerer weiterer erster Luftkanal 144 bereitgestellt werden.

Der zweite Luftkanal 146 erstreckt sich im Wesentlichen von einer werkstückseitigen Öffnung 148 der Absaughilfe 100 zu der Schnittstelle 104 der Absaughilfe 100. Das Gehäuse 102 der Absaughilfe 100 bildet im am Werkstück 30 anliegenden Zustand einen Verbindungsbereich 150, der die beiden ersten Luftkanäle 144 und den zweiten Luftkanal 146 miteinander verbindet. Der Verbindungsbereich 150 wird auf einer Seite durch die werkstückseitige Öffnung 148 begrenzt. Die werkstückseitige Öffnung 148 wird von einer Anlagefläche 152 umschlossen. Die Anlagefläche 152 wird von dem stirnseitigen Ende des Gehäuses 102 der Absaughilfe 100 gebildet.

Beabstandet zu der Anlagefläche 152 weist das Gehäuse 102 der Absaughilfe 100 ein Abstützelement 154 auf, das dazu ausgebildet ist, den von der Anlagefläche 152 aufgespannten Bereich, der an dem Werkstück 30 anliegt, zu vergrö-ßern. Vorteilhaft wird eine Verkippungswahrscheinlichkeit der Absaughilfe 100 am Werkstück 30 dadurch weiter verringert. Zwischen der Anlagefläche 152 und dem Abstützelement 154 ist beispielhaft ein Hohlraum 155 ausgebildet, in welchem das Gehäuse 102 nicht am Werkstück 30 anliegt. Alternativ ist auch denkbar, dass das Gehäuse 102 durchgehend bis zum Ende des Abstützelements 154 am Werkstück anliegt. Beispielhaft ist das Abstützelement 154 derart ausgebildet und angeordnet, dass ein maximaler Durchmesser 156, in welchem die Absaughilfe 100 am Werkstück 30 anliegt, bezogen auf einen maximalen Durchmesser 158 des Verbindungsbereichs 150 um mehr als 50% vergrößert ist.

Im Verbindungsbereich 150 (siehe Fig. 2d) ist zudem ein Luftleitelement 160 angeordnet, das dazu ausgebildet ist, den an dem Werkstück 30 mit staubversetzter Luft ausgesetzten Bereich zu verkleinern. Das Luftleitelement 160 ist im Wesentlichen mittig im Verbindungsbereich 150 angeordnet und erstreckt sich im Wesentlichen hin bis zur werkstückseitigen Öffnung 148 der Absaughilfe 100. Das Luftleitelement 160 kann als zusätzliche Abstützung auch derart ausgebildet sein, dass es am Werkstück 30 anliegt. Das Luftleitelement 160 ist zu dem zweiten Luftkanal 146 bzw. der Schnittstelle 104 hin geneigt ausgebildet, um das aus dem Bohrloch austretende Staubgut in den zweiten Luftkanal 146 zu führen. Vorteilhaft wird durch das Luftleitelement 160 das Werkstück 30 nicht vollständig, sondern nur teilweise im Bereich der werkstückseitigen Öffnung 148 dem Staub ausgesetzt, in diesem Fall nur zu ca. 60%.

In Fig. 2d ist die Absaughilfe 100 in einer perspektivischen Ansicht dargestellt. Durch das Luftleitelement 160 wird der von der Anlagefläche 152 aufgespannte Bereich in zwei Abschnitte geteilt. Einen oberen Abschnitt 162, der die Aufnahmeachse 112 umschließt und in welchem die ersten Luftkanäle 144 und der zweite Luftkanal 146 ineinander übergehen und in einen unteren Abschnitt 164, der nicht von der Aufnahmeachse 112 geschnitten wird. Die beiden Abschnitte 164 werden durch das Luftleitelement 160 getrennt, sind allerdings durch einen Durchgang 166 miteinander verbunden. Der Durchgang 166 des Luftleitelements 160 ist im inneren des Gehäuses 102 bzw. beabstandet zu der werkzeugseitigen Öffnung 148 der Absaughilfe angeordnet. Bei einer derartigen Anordnung des Luftleitelements 160 kommt das Werkstück im Wesentlichen nur im oberen Abschnitt 162 mit staubversetzter Luft in Kontakt.

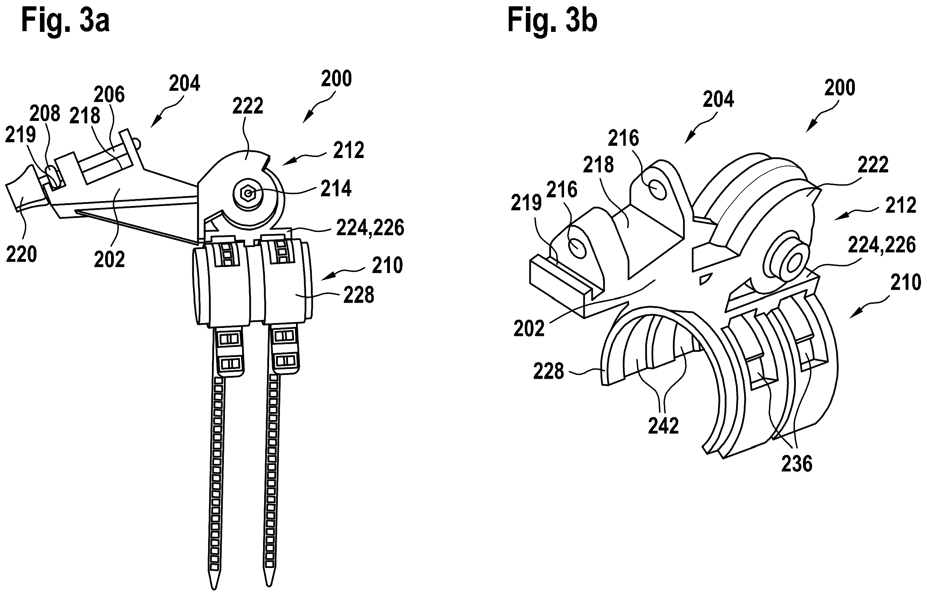

In Fig. 3a ist eine Seitenansicht der Befestigungsvorrichtung 200 gezeigt. In Fig. 3b ist eine perspektivische Ansicht der Befestigungsvorrichtung 200 ohne das Befestigungsmittel 206 der ersten Befestigungsschnittstelle 204 gezeigt.

Der Grundkörper 202 weist im Bereich der ersten Befestigungsschnittstelle 204 zwei beispielhaft zylindrische Durchgangsöffnungen 216 auf, die koaxial zueinander ausgerichtet sind. Zwischen den Durchgangsöffnungen 216 weist der Grundkörper 202, insbesondere die erste Befestigungsschnittstelle 204, eine erste Aussparung 218 auf, in welcher der Zusatzhandgriff 50 teilweise anordenbar (siehe Fig. 1a). Benachbart zu der ersten Aussparung 218 weist die erste Befestigungsschnittstelle 204 eine zweite Aussparung 219 auf, die zur axialen Sicherung des Befestigungsmittels 206 vorgesehen ist. Die erste Aussparung 218 und die zweite Aussparung 219 sind über eine der Durchgangsöffnungen 216 voneinander getrennt. Die zweite Aussparung 219 ist zur Aufnahme des Sicherungselements 208 vorgesehen, das beispielhaft als eine ringförmige Durchmessererweiterung auf dem Befestigungsmittel 206 ausgebildet ist. Um die Bedienbarkeit der ersten Befestigungsschnittstelle 204 zu vereinfachen, weist das Befestigungsmittel 206, an dem das Sicherungselement 208 angeordnet ist, ein Bedienelement 220 auf. Das Bedienelement 220 ist dazu vorgesehen, von dem Benutzer beim Verbinden oder Lösen der Befestigungsvorrichtung mit dem Zusatzhandgriff 50 gegriffen zu werden.

Alternativ wäre ebenso denkbar, dass das Befestigungsmittel 206 an seiner Außenfläche ein Schraubengewinde und eine Mutter aufweist, wobei das Befestigungsmittel 206 über die Mutter mit dem Grundkörper 202 verspannt wird.

Die Gelenkeinheit 212 der zweiten Befestigungsschnittstelle 210 umfasst ein erstes Gelenkelement 222 und ein zweites Gelenkelement 224, die zusammen ein Drehgelenk bilden, wodurch die zweite Befestigungsschnittstelle 210 um die Drehachse 214 drehbar ausgebildet ist.

Das erste Gelenkelement 222 wird von dem Grundkörper 202 der Befestigungsvorrichtung 200 gebildet. Das zweite Gelenkelement 224 wird von einem Schnittstellenelement 226 der zweiten Befestigungsschnittstelle 210 gebildet, das auf einer Seite das zweite Gelenkelement 224 umfasst und auf einer anderen Seite ein erste Befestigungselement 228 aufweist, das dazu ausgebildet ist, den Saugschlauch 36 zur Befestigung teilweise zu umgreifen. Das zweite Gelenkelement 224 und das erste Befestigungselement 228 sind somit drehfest miteinander verbunden und insbesondere einstückig miteinander ausgebildet.

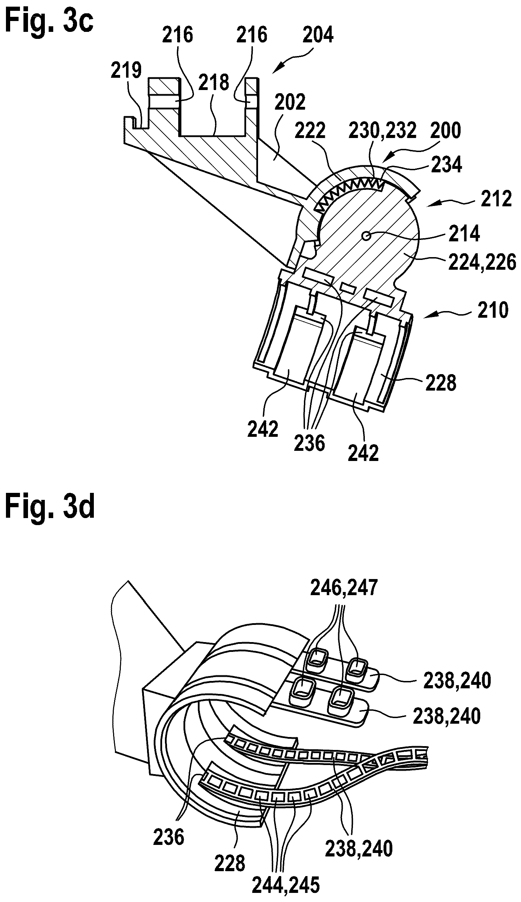

In Fig. 3c ist ein Längsschnitt der Befestigungsvorrichtung 200 gezeigt. Die Befestigungsvorrichtung 200 weist ein Rückstellelement 230 auf, das dazu ausgebildet ist, das zweite Gelenkelement 224 mit einer Rückstellkraft zu beaufschlagen. Das Rückstellelement 230 ist beispielhaft als eine Spiralfeder 232 ausgebildet und in einer Federelementaufnahme 234 angeordnet, die zwischen dem ersten und dem zweiten Gelenkelement 222, 224 angeordnet ist. Insbesondere ist das Rückstellelement 230 derart angeordnet, dass es auf einer Seite am ersten Gelenkelement 222 und auf einer gegenüberliegenden zweiten Seite am zweiten Gelenkelement 224 anliegt. Vorzugsweise wird das zweite Gelenkelement 224 derart mit einer Kraft beaufschlagt, dass das erste Befestigungselement 228 in Richtung der ersten Befestigungsschnittstelle 204 und/oder in Richtung der Absaughilfe 100 zubewegt wird.

In Fig. 3d ist eine perspektivische Ansicht der zweiten Befestigungsschnittstelle 210 gezeigt. Das erste Befestigungselement 228 der zweiten Befestigungsschnittstelle 210 ist im Wesentlichen c-förmig ausgebildet. Das erste Befestigungselement 228 ist insbesondere derart ausgebildet, dass es den Saugschlauch 36 in Umfangsrichtung um mehr als 180° umgreift. Vorteilhaft kann dadurch der Saugschlauch 36 formschlüssig gehalten werden. Des Weiteren weist das erste Befestigungselement 228 Befestigungselementaufnahmen 236 auf, die dazu ausgebildet sind, ein zweites Befestigungselement 238 aufzunehmen. Das zweite Befestigungselement 238 ist relativ beweglich zu dem ersten Befestigungselement 228 ausgebildet. Beispielhaft weist die Befestigungsvorrichtung 200 zwei zweite Befestigungselemente 238 auf, die als Kabelbinderelemente 240 ausgebildet sind. Beispielhaft weist das erste Befestigungselement 228 je Kabelbinderelement 240 zwei Befestigungselementaufnahmen 236 auf, die zur Führung der Kabelbinderelemente 240 ausgebildet sind. Im mit dem ersten Befestigungselement 228 verbundenen Zustand ist das zweite Befestigungselement 238 teilweise innerhalb des Schnittstellenelement 226 angeordnet. Zur Verbesserung der Führung weist das erste Befestigungselement 228 an seiner Innenfläche Führungsbahnen 242 für das zweite Befestigungselement 238 bzw. das Kabelbinderelement 240 auf. Alternativ oder zusätzlich ist ebenso denkbar, dass die Außenfläche des ersten Befestigungselements 228 Führungsbahnen für das zweite Befestigungselement 238 aufweist.

Die Kabelbinderelemente 240 sind aus einem flexiblen und biegbaren Material, insbesondere einem elastischen Kunststoff ausgebildet und in Fig. 3d in einer perspektivischen Ansicht im mit dem ersten Befestigungselement 228 verbundenen Zustand gezeigt. Die Kabelbinderelemente 240 weisen zwei zueinander korrespondierende Formschlusselemente 244, 246 auf, über die die Kabelbinderelemente 240 mit sich selbst kraft- und/oder formschlüssig verbindbar ausgebildet sind.

Die ersten Formschlusselemente 244 sind als beispielhaft im Wesentlichen rechteckige Ausnehmungen 245 ausgebildet. Die Kabelbinderelemente 240 weisen jeweils eine Vielzahl an ersten Formschlusselemente 244 auf, die in einer Reihe und gleichbeabstandet angeordnet sind. Die zweiten Formschlusselemente 246 sind als Erhebungen 247 derart ausgebildet, dass sie im verbundenen Zustand in jeweils ein erstes Formschlusselement 244 bzw. in eine Ausnehmung 245 eingreifen. Die Kabelbinderelemente 240 weisen beispielhaft jeweils zwei zweite Formschlusselemente 246 auf. Die ersten Formschlusselemente 244 und die zweiten Formschlusselemente 246 sind auf einander gegenüberliegenden Enden der Kabelbinderelemente 240 angeordnet.

Die Kabelbinderelemente 240 sind derart elastisch ausgebildet, dass die Kabelbinderelemente 240 durch den Benutzer in Ihrer Länge um eine Strecke verlängerbar sind, die insbesondere einem halben Abstand der ersten Formschlusselemente 244 voneinander, vorzugsweise einem Abstand der ersten Formschlusselemente 244 voneinander, bevorzugt einem doppelten Abstand der ersten Formschlusselemente 244 voneinander, entspricht.

Es ist zudem denkbar, dass die Handwerkzeugmaschine 10 neben der Absaughilfe 100 und der Befestigungsvorrichtung 200 noch mit einem weiteren Kabelbinderelement 240 (siehe Fig. 1) am Handgriff 48 der Handwerkzeugmaschine 10 verbunden ist, um die Ergonomie des Gesamtsystems weiter zu verbessern.

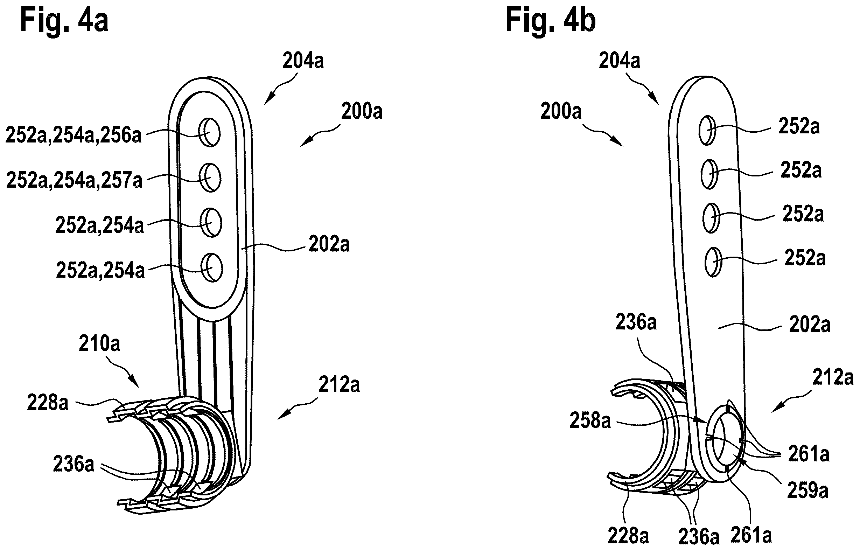

In Fig. 4a ist eine weitere Ausführungsform der Befestigungsvorrichtung 200a in einer perspektivischen Ansicht gezeigt. Die Befestigungsvorrichtung 200a weist einen Grundkörper 202a auf. Zudem umfasst die Befestigungsvorrichtung 200a eine erste Befestigungsschnittstelle 204a und eine zweite Befestigungsschnittstelle 210a.

Die erste Befestigungsschnittstelle 204a umfasst beispielhaft vier Positionierungselemente 252a, die zur kraft- und/oder formschlüssigen Verbindung der Befestigungsvorrichtung 200a mit der Handwerkzeugmaschine 10 bzw. dem Zusatzhandgriff 50 ausgebildet sind. Die Positionierungselemente 252a weisen jeweils einen unterschiedlichen Abstand zur zweiten Befestigungsschnittstelle 204a auf. Die Positionierungselemente 252a sind beispielhaft in einer geraden Reihe angeordnet und beispielhaft als zylindrische Aussparungen 254a im Grundkörper 202a der Befestigungsvorrichtung 200a ausgebildet. Das erste Positionierungselement 256a weist den größten Abstand zu der zweiten Befestigungsschnittstelle 210a auf. Insbesondere ist der Abstand des ersten Positionierungselements 256a zur zweiten Befestigungsschnittstelle 210a größer als der Abstand des zweiten Positionierungselement 257a zur zweiten Befestigungsschnittstelle 210a.

Der Zusatzhandgriff 50 weist eine Schraubverbindung (nicht dargestellt) auf, die einen Handgriffbereich 51 (siehe Fig. 1a) des Zusatzhandgriffs 50 mit einem Anschlussbereich (nicht dargestellt) des Zusatzhandgriffs 50 lösbar verbindet. Der Anschlussbereich der Zusatzhandgriffs 50 umschließt die Handwerkzeugmaschine 10, insbesondere die Werkzeugaufnahme 22, zur Verbindung mit dieser. Derartige Zusatzhandgriff sind weit verbreitet und dem Fachmann bekannt. Der Handgriffbereich 51 ist von dem Anschlussbereich durch ein Drehen des Handgriffbereichs 51 lösbar ausgebildet. Im gelösten Zustand wird die nicht dargestellte Schraubverbindung durch eines der Positionierungselemente 252a geführt und im Anschluss werden durch ein Drehen der Handgriffbereich 51 und der Anschlussbereich derart verbunden, dass zwischen diesen Bereichen die Befestigungsvorrichtung 200a angeordnet ist. Durch die Wahl des Positionierungselemente 252a kann der Abstand der zweiten Befestigungsvorrichtung 200a von der Handwerkzeugmaschine 10 festgelegt werden.

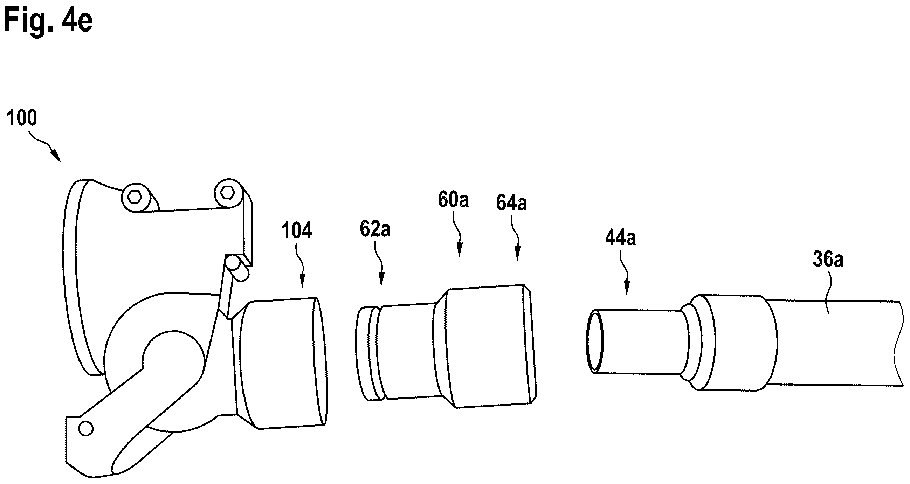

Eine einstellbare Positionierung gegenüber der Handwerkzeugmaschine 10 ist insbesondere nützlich, falls die Kopplungsschnittstelle 44a des Saugschlauches 36a nicht kompatibel mit der Schnittstelle 104 der Absaughilfe 100 ausgebildet ist, wie beispielsweise in Fig. 4e gezeigt. In diesem Fall ist ein Adapter 60a notwendig, der an einem Ende eine zu der Schnittstelle 104 der Absaughilfe 100 korrespondierende Absaughilfeschnittstelle 62a und eine zu der Kopplungsschnittstelle 44a des Saugschlauches 36a korrespondierende Saugschlauchschnittstelle 64a aufweist. Durch den Adapter 60a rückt das Ende des Saugschlauches 36a um im Wesentlichen die Länge des Adapters 60a in Richtung der Befestigungsvorrichtung 200a, wodurch die Beweglichkeit des Saugschlauches 36a beeinträchtigt werden kann. Durch die Wahl eines entsprechenden Positionierungselements 252a kann die Länge des Adapters 60a vorteilhaft ausgeglichen werden.

Die zweite Befestigungsschnittstelle 210a weist ein erstes Befestigungselement 228a auf, das im Wesentlichen dem zuvor beschriebenen ersten Befestigungselement 228 entspricht. So weist das erste Befestigungselement 228a mehrere Befestigungselementaufnahmen 236a zur Verbindung und Führung von nicht dargestellten zweiten Befestigungselementen 238 auf, die wie zuvor als Kabelbinderelemente 240 ausgebildet sein können.

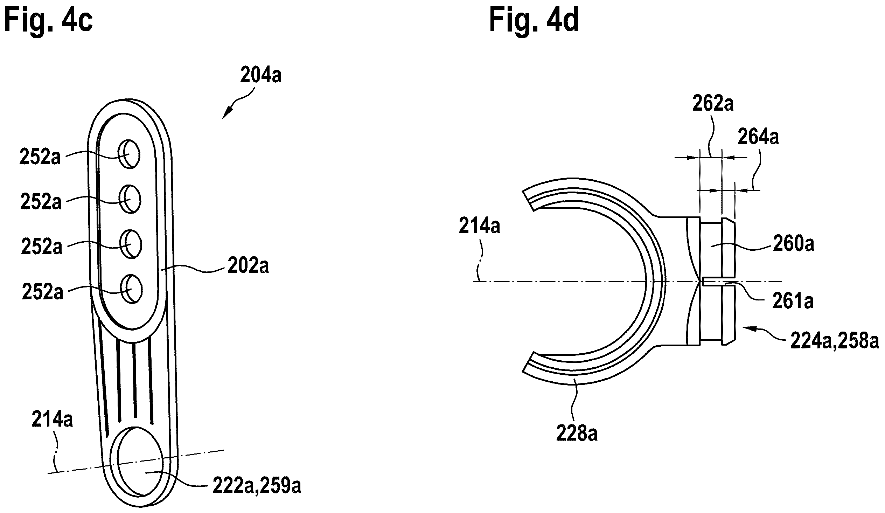

Das erste Befestigungselement 228a ist werkzeuglos lösbar mit dem Grundkörper 202a verbunden. Die Verbindung erfolgt über einen Rastschluss, wobei das erste Befestigungselement 228a ein Rastelement 258a aufweist. Der Grundkörper 202a der Befestigungsvorrichtung 200a weist ein zu dem Rastelement 258a korrespondierendes Formschlusselement 259a auf, das beispielhaft als eine zylindrische Aussparung ausgebildet ist (siehe Fig. 4c).

Das erste Befestigungselement 228a ist in Fig. 4d in einer Seitenansicht gezeigt. Das Rastelement 258a ist beispielhaft als ein im Wesentlichen hohlzylinderförmiges Rastelement 258a ausgebildet. Eine hohlzylinderförmige Wandung 260a des Rastelements 258a weist zwei Bereiche 262a, 264a mit unterschiedlichen Durchmessern auf. Im ersten Bereich 262a ist der Durchmesser kleiner als im zweiten Bereich 264a ausgebildet. Zudem ist der Durchmesser im ersten Bereich 262a im Wesentlichen konstant ausgebildet. Der erste Bereich 262a ist zur Aufnahme des Grundkörpers 202c derart ausgebildet, sodass der Grundkörper 202c im verbundenen Zustand beweglich am ersten Befestigungselement 228a anliegt. Vorteilhaft bildet das Rastelement 258a und die Aussparung 259a des Grundkörpers 202a ein Drehgelenk zur beweglichen Verbindung der zweiten Befestigungsschnittstelle 210a um eine Drehachse 214a. Somit entspricht die Aussparung 259a des Grundkörpers 202a dem ersten Gelenkelement 222a und das Rastelement 258a dem zweiten Gelenkelement 224a der Gelenkeinheit 212a der Befestigungsvorrichtung 200a.

Der zweite Bereich 264a des Rastelements 258a weist einen beispielhaft konisch verlaufenden Außendurchmesser auf. Der zweite Bereich 264a ist im mit dem Grundkörper 202a verbundenen Zustand zur Bildung eines Hinterschnitts ausgebildet.

Das Rastelement 258a ist zumindest teilweise elastisch ausgebildet. Beispielhaft weist die Wandung 260a vier Schlitze 261a auf, über die das Rastelemente 258a in vier elastische Segmente geteilt ist. Die Schlitze 261a sind entlang der Umfangsrichtung um jeweils 90° voneinander beabstandet, sodass die Segmente beispielhaft die gleiche Größe aufweisen. Das Rastelement 258a ist derart elastisch ausgebildet, dass bei dem Verbindungsprozess mit dem Grundkörper 202a der Außendurchmesser des Rastelements 258a auf einen Wert unter dem Durchmesser der Aussparung 259a des Grundkörpers 202a verkleinerbar ist. Wie in Fig. 4b zu sehen, hintergreift das Befestigungselement 228a den Grundkörper 202a im verbundenen Zustand.

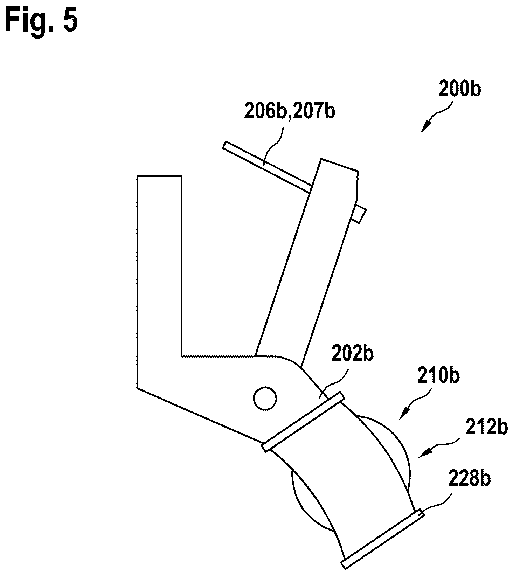

In Fig. 5 ist eine weitere alternative Ausführungsform der Befestigungsvorrichtung 200b in einer Seitenansicht gezeigt. Die zweite Befestigungsschnittstelle 210b entspricht dabei im Wesentlichen der zweiten Befestigungsschnittstelle 210a der vorhergehenden Ausführungsform. Die zweite Befestigungsschnittstelle 210b umfasst somit eine Gelenkeinheit 210b, über die das erste Befestigungselement 228b für den Saugschlauch drehbar mit dem Grundkörper 202b der Befestigungsvorrichtung 200b verbindbar ist.

Die erste Befestigungsschnittstelle 204b der Befestigungsvorrichtung 200b umfasst ein Befestigungsmittel 206b, das drehbar mit dem Grundkörper 202b verbunden ist. Das Befestigungsmittel 206b ist beispielhaft als ein Schraubenelement 207b ausgebildet. Das Befestigungsmittel 206b ist zur Verbindung mit dem Zusatzhandgriff 50 über die Tiefenanschlagsaufnahme vorgesehen. Das Befestigungsmittel 206b weist ein Schraubengewinde auf, über welches das Befestigungsmittel 206b mit einem korrespondierenden Gegengewinde (nicht dargestellt) im Grundkörper 202b verbindbar ist.

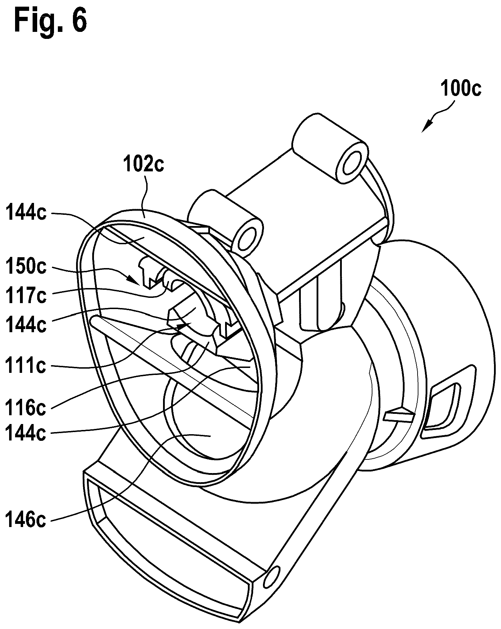

In Fig. 6 ist eine alternative Ausführung der Absaughilfe 100 gemäß Fig. 2d in einer perspektivischen Ansicht gezeigt. Die Absaughilfe 100c unterscheidet sich insbesondere durch einen zusätzlichen ersten Luftkanal 144c zur Ansaugung von Luft in den Verbindungsbereich 150c und durch ein zusätzliches Lagerungselement 117c in der Aufnahme 111c zur Aufnahme des Einsatzwerkzeugs 24.

Der zusätzliche erste Luftkanal 144c ist im Gehäuse 102c der Absaughilfe 100c oberhalb der Aufnahme 111c angeordnet. Dadurch weist die Absaughilfe 100c insgesamt drei erste Luftkanäle 144c auf, die zumindest bereichsweise getrennt voneinander verlaufen und im Verbindungsbereich 150c ineinander übergehen und in den zweiten Luftkanal 146c münden.

Das zusätzliche Lagerungselement 117c ist aus einem anderen Werkstoff als das Gehäuse 102c der Absaughilfe ausgebildet. Insbesondere besteht das zusätzliche Lagerungselement 117c aus einem verschleißresistenteren Material als das Gehäuse 102 der Absaughilfe. Das zusätzliche Lagerungselement 117c kann aus einem Kunststoff oder einem Metall, beispielsweise Stahl, ausgebildet sein. Das zusätzliche Lagerungselement 117c ist beispielhaft stoffschlüssig über eine Klebeverbindung mit dem Gehäuse 102c verbunden. Es wäre allerdings ebenso denkbar, dass das zusätzliche Lagerungselement 117c über eine kraft- und/oder formschlüssige Verbindung mit dem Gehäuse 102c verbunden ist. Das zusätzliche Lagerungselement 117c erstreckt sich im Wesentlichen entlang der gesamten Aufnahme 111c und weist einen nicht geschlossenen Kreisring als Querschnitt auf. Der Aufnahmebereich 114c wird somit im Wesentlichen durch das bewegliche Aufnahmeelement 116c und das zusätzliche Lagerungselement 117c begrenzt.

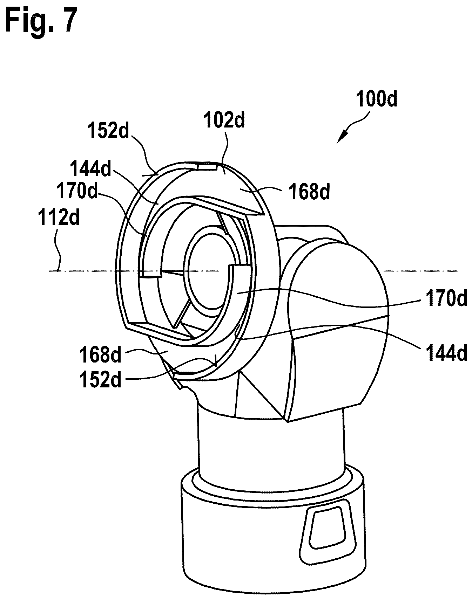

In Fig. 7 ist eine weitere alternative Ausführungsform der Absaughilfe 100d in einer perspektivischen Ansicht gezeigt. Die Absaughilfe 100d weist insbesondere zwei erste Luftkanäle 144d auf, die zur Ansaugung von Luft ausgebildet sind, wobei die Lufteinlassöffnungen 168d der ersten Luftkanäle 144d im Bereich der werkstückseitigen Öffnung 148d angeordnet sind.

Die ersten Luftkanäle 144c sind seitlich durch die Anlagefläche 152d und durch Luftleitelemente 170d begrenzt. Die Luftleitelemente 170d sind dazu ausgebildet, die Strecke, die der Luftstrom ausgehend von den Lufteinlassöffnungen 168d zu dem zweiten Luftkanal 146d durchläuft, zu verlängern. Insbesondere ist das Luftleitelement 170d dazu ausgebildet, den Luftstrom gekrümmt, vorzugsweise wie beispielhaft dargestellt auf einer Kreisbahn, um die Aufnahmeachse 112d herum zu führen.

Vorteilhaft kann dadurch sichergestellt werden, dass nicht der gesamte Bereich der von der Anlagefläche 152d aufgespannt wird, mit staubversetzter Luft in Kontakt tritt. Vorteilhaft wird mit Blick auf die Aufnahmeachse 112d nur im Wesentlichen der Bereich der staubversetzten Luft ausgesetzt, der von den Luftleitelementen 170d aufgespannt wird.

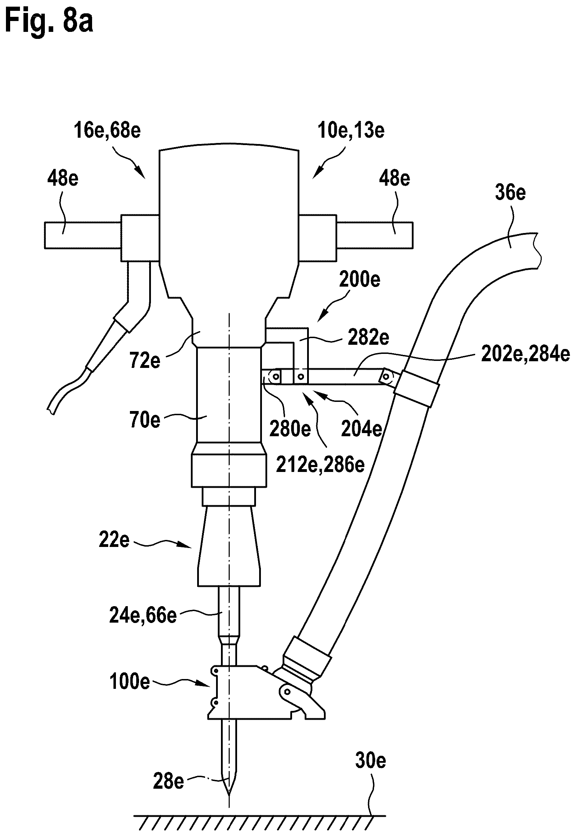

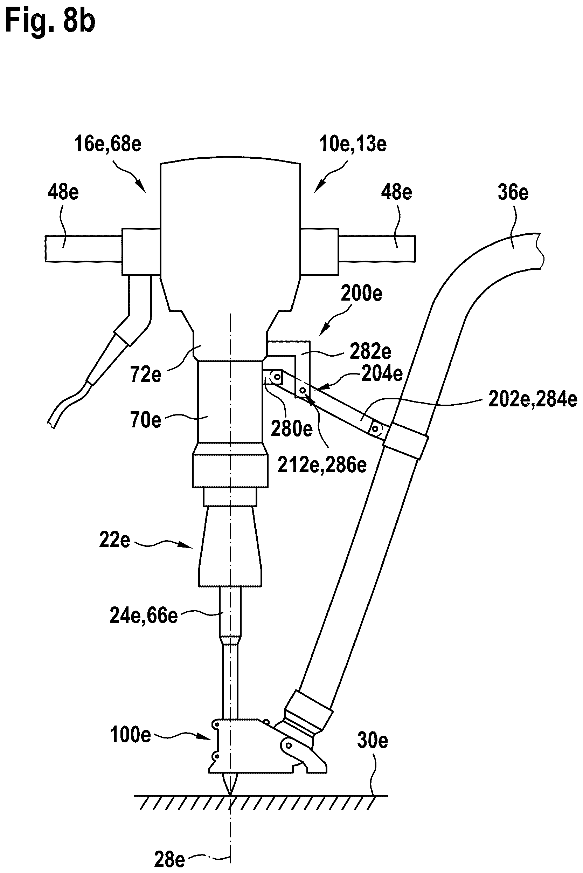

In Fig. 8a und Fig. 8b ist eine weitere Ausführungsform der Befestigungsvorrichtung 200e in einer schematischen Seitenansicht gezeigt. Die Befestigungsvorrichtung 200e ist an einer als ein Abbruchhammer 13e ausgebildeten Handwerkzeugmaschine 10e befestigt.

Der Abbruchhammer 13e ist für schwere Abbruchbauarbeiten vorgesehen und weist ein Schlagwerk zum linear oszillierenden Antrieb eines Einsatzwerkzeugs 24e entlang der Arbeitsachse 28e auf. Das Einsatzwerkzeug 24e ist in der Werkzeugaufnahme 22e lösbar aufgenommen. Der Abbruchhammer weist ein derart hohes Gewicht auf, dass er im Betrieb nicht gehalten, sondern nur geführt wird. Hierzu weist der Abbruchhammer 13e zwei Handgriffe 48e auf, die sich senkrecht zu der Arbeitsachse 28e erstrecken. Das Einsatzwerkzeug 24e ist beispielhaft als ein Meißel 66e.

Um die starken Vibrationen des Abbruchshammers 13e im Betrieb nur gedämpft an den Benutzer zu übertragen, ist das Gehäuse 16e der Handwerkzeugmaschine 10e als ein entkoppeltes Gehäuse 68e ausgebildet. Das entkoppelte Gehäuse 68e umfasst zwei Außengehäuseteile 70e, 72e die über eine Vibrationsdämpfungseinheit (nicht dargestellt) entkoppelt voneinander miteinander verbunden sind. Durch die Entkopplung bewegen sich die beiden Außengehäuseteile 70e, 72e beim Ansetzen an ein Werkstück oder bei Auftreten von Vibrationen relativ zueinander. Die Werkzeugaufnahme 22e ist beispielhaft im Wesentlichen unbeweglich mit dem ersten Außengehäuseteil 70e verbunden. In Fig. 8a ist die Handwerkzeugmaschine 10e über das Einsatzwerkzeug 24e am Werkstück 30e lediglich angesetzt, es wird somit über den Benutzer kein zusätzlicher Druck entlang der Arbeitsachse 28e ausgeübt. In Fig. 8b ist die Handwerkzeugmaschine 10e während des Meißelns gezeigt, wobei durch den Druck des Benutzers entlang der Arbeitsachse 28e das zweite Außengehäuseteil 72e in Richtung des ersten Außengehäuseteils 70e, insbesondere in Richtung der Werkzeugaufnahme 22e, verschoben ist. Somit wird durch die Krafteinwirkung auf die Handgriffe 48e, insbesondere auf das zweite Außengehäuseteil 72e, der Abstand zwischen dem ersten und dem zweiten Außengehäuseteil 70e, 72e, insbesondere der Abstand zwischen dem zweiten Außengehäuseteil 72e und der Werkzeugaufnahme 22e, verringert.

Der Meißel 66e ist mit einer Absaughilfe 100e verbunden, die im Wesentlichen der Absaughilfe 100 gemäß Fig. 1a entspricht. Die Absaughilfe 100e ist über einen Saugschlauch 36e mit einer nicht dargestellten Absaugvorrichtung verbunden. Zur besseren Führung des Saugschlauches 36 ist dieser zusätzlich über die Befestigungsvorrichtung 200e am entkoppelten Gehäuse 68e der Handwerkzeugmaschine 10e befestigt.

Die Befestigungsvorrichtung 200e weist eine erste Befestigungsschnittstelle 204e zur Befestigung der Befestigungsvorrichtung 200e am entkoppelten Gehäuse 68e der Handwerkzeugmaschine 10e und ein zweite Befestigungsschnittstelle 210e zur lösbaren Befestigung des Saugschlauches 36e an der Befestigungsvorrichtung 200e auf. Die zweite Befestigungsschnittstelle 210e kann beispielsweise analog zu der zweiten Befestigungsschnittstelle 210a gemäß Fig. 4a ausgebildet sein.

Die erste Befestigungsschnittstelle 204e weist zwei Befestigungsmittel 280e, 282e auf, die jeweils lösbar oder fest mit dem entkoppelten Gehäuse 68e der Handwerkzeugmaschine 10 verbunden sind. Insbesondere ist das erste Befestigungsmittel 280e mit dem ersten Außengehäuseteil 70e und das zweite Befestigungsmittel 282e mit dem zweiten Außengehäuseteil 72e verbunden, sodass die beiden Befestigungsmittel 280e, 282e beim Ansetzen an ein Werkstück aufeinander zubewegt werden.

Die beiden Befestigungsmittel 280e, 282 sind über eine Verstärkungseinheit 286e miteinander verbunden. Die Verstärkungseinheit 286 ist beispielhaft als eine Gelenkeinheit 212e ausgebildet. Insbesondere sind die beiden Befestigungsmittel 280e, 282e über einen Grundkörper 202e, der beispielsweise als eine Hebelgabel 284e ausgebildet ist, miteinander verbunden. Die Gelenkeinheit 212e ist beispielhaft als ein Stiftgelenk ausgebildet.

Vorteilhaft ist die zweite Befestigungsschnittstelle 210e über die Hebelgabel 284e derart mit dem entkoppelten Gehäuse 68e verbunden, dass eine Relativbewegung der Außengehäuseteile 70e, 72e um einen Faktor von zumindest 2, insbesondere zumindest 4, bevorzugt zumindest 6, auf die Position der zweiten Befestigungsschnittstelle 210e übertragen wird. Beispielhaft wird eine Relativbewegung der Außengehäuseteile 70e, 72e um 20 mm zueinander in eine Relativbewegung der zweiten Befestigungsschnittstelle 210e von 80 mm übertragen. Insbesondere wird bei einer Bewegung des ersten Außengehäuseteils 70e in Richtung des zweiten Außengehäuseteils 72e die zweite Befestigungsschnittstelle 210e in Richtung der Absaughilfe 100 um einen vergrößerten Betrag zubewegt. Vorteilhaft kann dadurch eine bessere Sicht auf das Einsatzwerkzeug 24 im unbelasteten Zustand realisiert werden. Der Abstand zwischen der Absaughilfe 100e und der Befestigungsvorrichtung 200e ist im Wesentlichen gleichbleibend ausgebildet und ist somit im Wesentlichen unabhängig von der Relativbewegung der Außengehäuseteile 70e, 72e ausgebildet.

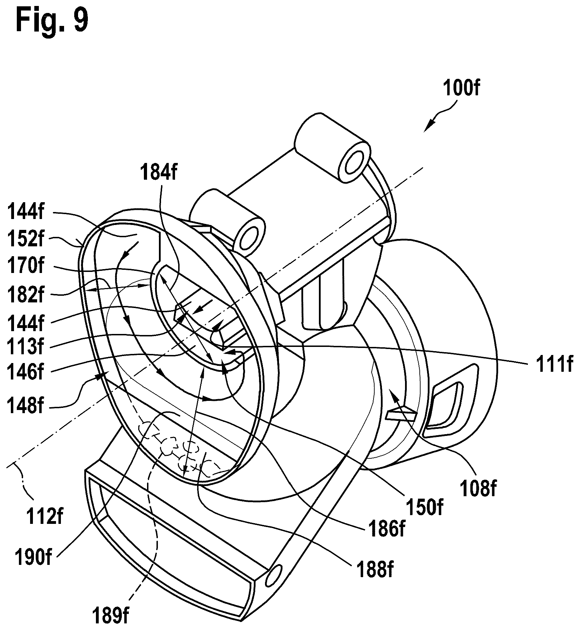

In Fig. 9 ist eine weitere alternative Ausführungsform der Absaughilfe 100f in einer perspektivischen Ansicht gezeigt. Die Absaughilfe 100d weist insbesondere zwei erste Luftkanäle 144f auf, die zur Ansaugung von Luft ausgebildet sind. Einer der ersten Luftkanäle 144f wird dabei wie zuvor beschrieben durch die Aufnahme 108f gebildet. Ein weiterer erster Luftkanal 144f weist eine Lufteinlassöffnung auf (nicht dargestellt), die auf einer der werkstückseitigen Öffnung 148f abgewandten Seite der Absaughilfe 100f angeordnet ist. Es wäre auch denkbar, auf den ersten Luftkanal 144f, der durch die Aufnahme 111f gebildet wird, zu verzichten.

Der weitere erste Luftkanal 144f ist seitlich durch die Anlagefläche 152f und durch ein einzelnes Luftleitelement 170f begrenzt. Die werkstückseitige Öffnung 148f ist vollständig von der Anlagefläche 152f umschlossen, sodass zwischen dem Werkstück und der Absaugvorrichtung 100f keine Luft eintreten kann. Das Luftleitelement 170f umschließt die zweite Öffnung 113f der Aufnahme 111f in einem Winkelbereich von zumindest 90°, vorzugsweise zumindest 180°, bevorzugt und beispielhaft zumindest 270° um die Aufnahmeachse 112f. Insbesondere wird der Verbindungsbereich 150f, in welchem die ersten Luftkanäle 144f und der zweite Luftkanal 146f ineinander übergehen, auf zwei gegenüberliegenden Seiten von dem Luftleitelement 170f begrenzt. Das Luftleitelement 170f beginnt im Wesentlichen auf selber Höhe wie die Anlagefläche 152f.

Das Luftleitelement 170f ist dazu ausgebildet, die Strecke, die der Luftstrom ausgehend von den Lufteinlassöffnungen zu dem zweiten Luftkanal 146f durchläuft, zu verlängern. Insbesondere ist das Luftleitelement 170d dazu ausgebildet, den Luftstrom gekrümmt, vorzugsweise wie beispielhaft dargestellt auf einer Kreisbahn, um die Aufnahmeachse 112f herum zu dem Verbindungsbereich 150f zu führen. Um einen ausreichend großen Luftstrom zu gewährleisten ist ein minimaler Abstand 182f von der Anlagefläche 152f zu dem Luftleitelement 170f zumindest halb so groß wie ein Durchmesser 184f des Verbindungsbereichs 150f. Ein maximaler Durchmesser 186f von der Anlagefläche 152f zu dem Luftleitelement 170f ist größer, beispielhaft mehr als zweimal so groß, wie der Durchmesser des Verbindungsbereichs 150f.

Zudem weist die Absaugvorrichtung 100f im Bereich der werkzeugseitigen Öffnung 148f eine Aufnahmetasche 188f auf, die dazu vorgesehen ist, größere Gesteinsstücke 189f aufzunehmen, die aufgrund ihrer Größe nicht absaugbar sind. Die Aufnahmetasche 188f weist ein Öffnung 190f auf, die nach oben bzw. in Richtung des Verbindungsbereichs 150f gerichtet ist.

## Patentansprüche

1. Absaughilfe für eine Handwerkzeugmaschine (10), mit einem Gehäuse (102), mit einer Aufnahme (111) für ein Einsatzwerkzeug (24), mit einer Schnittstelle (104) zur Verbindung der Absaughilfe (100) mit einer Absaugvorrichtung (32), insbesondere einem Ende (42) eines Saugschlauches (36) der Absaugvorrichtung (32),
**dadurch gekennzeichnet, dass**
die Schnittstelle (104) eine Gelenkeinheit (108) aufweist, die dazu ausgebildet ist, die Schnittstelle (104) beweglich mit dem Gehäuse (102) zu verbinden.

2. Absaughilfe nach Anspruch 1, **dadurch gekennzeichnet, dass** die Schnittstelle (104) derart beweglich ausgebildet ist, dass die Schnittstelle (104) genau einen ersten rotatorischen Freiheitsgrad aufweist.

3. Absaughilfe nach Anspruch 1, **dadurch gekennzeichnet, dass** die Schnittstelle derart beweglich ausgebildet, dass die Schnittstelle zumindest zwei rotatorische Freiheitsgrade aufweist.

4. Absaughilfe nach einem der vorhergehenden Ansprüche, **dadurch gekennzeichnet, dass** die Gelenkeinheit (108) derart ausgebildet ist, dass die Schnittstelle (104) in einem Winkelbereich von zumindest 45°, vorzugsweise zumindest 90°, bevorzugt zumindest 120°, schwenkbar ist.

5. Absaughilfe nach einem der vorhergehenden Ansprüche, **dadurch gekennzeichnet, dass** eine Verbindungsachse, entlang der die Absaugvorrichtung (32) mit der Absaughilfe (100) verbindbar ist, in zumindest einem Zustand parallel zu einer Aufnahmeachse (112) ausgebildet ist, entlang der sich die Aufnahme (111) des Gehäuses (102) der Absaughilfe (102) erstreckt.

6. Absaughilfe nach einem der vorhergehenden Ansprüche, **dadurch gekennzeichnet, dass** die Aufnahme (111) ein Aufnahmeelement (116) und ein Federelement (126) aufweist, wobei das Federelement (126) das Aufnahmeelement (116) mit einer Kraft beaufschlagt.

7. Absaughilfe nach Anspruch 6, **dadurch gekennzeichnet, dass** das Aufnahmeelement (116) derart strömungsoptimiert ausgebildet ist, dass das Aufnahmeelement (116) einen beabstandet zu der Aufnahme (111) ausgebildeten Luftkanal (144) teilweise oder vollständig begrenzt.

8. Absaughilfe nach Anspruch 7, **dadurch gekennzeichnet, dass** die Aufnahme (111) zumindest ein Betätigungselement (130) aufweist, über das ein Aufnahmebereich (114) der Aufnahme (111) vergrößerbar ist

9. Absaughilfe nach einem der vorhergehenden Ansprüche, **dadurch gekennzeichnet, dass** das Gehäuse (102) zumindest einen ersten Luftkanal (144) zur Ansaugung von Frischluft und einen zweiten Luftkanal (146) zur Absaugung des Bohrkleins aufweist, wobei das Gehäuse (102) einen Verbindungsbereich (150) bildet, der zur strömungstechnischen Verbindung der beiden Luftkanäle (144, 146) im am Werkstück (30) anliegenden Zustand der Absaughilfe (100) ausgebildet ist.

10. Absaughilfe nach Anspruch 9, **dadurch gekennzeichnet, dass** der erste Luftkanal (144d) gekrümmt oder entlang einer Kreisbahn um die Aufnahmeachse (112d) verläuft.

11. Absaughilfe nach einem der vorhergehenden Ansprüche, **dadurch gekennzeichnet, dass** das Gehäuse (102) ein Abstützelement (154) aufweist, das zur Vergrößerung einer Anlagefläche (152) der Absaughilfe (100) ausgebildet ist.

12. Absaughilfe nach einem der Ansprüche 9 bis 11 **dadurch gekennzeichnet, dass** die Absaughilfe (100) im Verbindungsbereich (150) ein Luftleitelement (160) aufweist, wobei das Luftleitelement (160) dazu ausgebildet, den an einem Werkstück (30) mit staubversetzter Luft ausgesetzten Bereich zu verkleinern.
